(19) Europäisches Patentamt
European Patent Office
Office européen des brevets

(11) **EP 3 360 701 B1**

(12) **EUROPEAN PATENT SPECIFICATION**

(45) Date of publication and mention
of the grant of the patent:
**07.04.2021 Bulletin 2021/14**

(21) Application number: **18154701.9**

(22) Date of filing: **01.02.2018**

(51) Int Cl.:
***B60C 19/12*** *(2006.01)*

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2017 JP 2017023477**

(43) Date of publication of application:
**15.08.2018 Bulletin 2018/33**

(73) Proprietor: **Sumitomo Rubber Industries, Ltd.
Kobe-shi
Hyogo-ken (JP)**

(72) Inventor: **YUKAWA, Naoki
Kobe-shi Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 009 260     JP-A- 2002 332 475
US-A- 3 881 537     US-A- 4 057 090**

**Description**

BACKGROUND OF THE INVENTION

Field of the Invention

The present invention relates to a pneumatic tire.

Description of the Background Art

Sealant tires having a sealant material applied to the inner peripheral surface of the tire have been known as pneumatic tires having a puncture prevention function (hereinafter, pneumatic tires are also referred to merely as tires). In a sealant tire, a hole formed at the time of puncture is automatically closed by the sealant material. An accordingly designed tire is for instance disclosed in US 4 057 090 A.

Examples of the known methods for producing sealant tires include: a method in which a diluted sealant material obtained by adding an organic solvent to a sealant material to decrease the viscosity of the sealant material for easy handling is attached to the inner surface of a tire, and the organic solvent is removed from the diluted sealant material after the attachment; and a method in which a main agent and a curing agent prepared with a batch type kneader are mixed using a static mixer or a dynamic mixer to prepare a sealant material, and then the sealant material is attached to the inner peripheral surface of a tire.

Meanwhile, in a sealant tire, since the sealant material applied to the inner peripheral surface of the tire has adhesiveness, foreign matter such as insects and small animals may adhere to the sealant material to reduce the salability of the tire. On the other hand, Japanese Laid-Open Patent Publication No. 2009-269446 indicates that the problem of foreign matter adhering to the inner peripheral surface of a tire can be solved by filling a tube formed of a resin film with a sealant material.

As a result of a thorough study, the present inventor has found the following.

In the conventional art, when running is performed with puncture-causing foreign matter (for example, a nail having a diameter of 5 mm and a length of 60 mm) stuck in the tread portion of a tire, the puncture-causing foreign matter may fall off from the tire (the stuck nail may come out) due to expansion of the hole formed by the puncture-causing foreign matter, during running. In this case, the sealant material may flow out through the hole, so that the internal pressure may be lost. In addition, even if the puncture-causing foreign matter has not fallen off from the tire (the nail has not come out) during running, when the puncture-causing foreign matter is removed by a human (the nail is pulled out by a human) after the running, the sealant material may flow out through the hole, so that the internal pressure may be lost.

As described above, in the conventional art, immediately after a hole is formed by puncture-causing foreign matter (a nail becomes stuck), favorable sealing performance (initial sealing performance) is exerted after removal of the puncture-causing foreign matter, but when running is performed with the puncture-causing foreign matter stuck, the internal pressure may be lost, for example, when the puncture-causing foreign matter comes out during the running, or when the puncture-causing foreign matter is pulled out by a human after the running.

In other words, when running is performed in a state where the puncture-causing foreign matter is stuck, favorable sealing performance (sealing performance after running) may not be obtained after the puncture-causing foreign matter is removed.

SUMMARY OF THE INVENTION

An object of the present invention is to provide a sealant tire that solves the above-described problem and that has excellent sealing performance after running while inhibiting foreign matter from adhering to the inner peripheral surface of the tire.

The present invention is directed to a pneumatic tire (sealant tire) including a sealant layer located inward of an inner liner in a tire radial direction, wherein particles having a shape factor F of 5.00 to 1.00 (F = L/E, L represents a maximum dimension of the particles, E represents a minimum dimension of the particles) are provided on an inner surface of the sealant layer in the tire radial direction, and wherein the maximum dimension L of the particles is 1.0 mm to 6.0 mm and the particles are present on the inner surface of the sealant layer in the tire radial direction at a density of 1 particle/cm² to 120 particles/cm².

The shape factor F of the particles is preferably 1.25 to 1.00.

The maximum dimension L of the particles is 1.0 mm to 6.0 mm.

The particles are preferably formed from a resin or cellulose.

The resin is preferably a thermosetting resin.

The particles are present on the inner surface of the sealant layer in the tire radial direction at a density of 1

particle/cm$^2$ to 120 particles/cm$^2$.

Preferably, the sealant layer is formed of a substantially string-shaped sealant material continuously and helically arranged along an inner peripheral surface of the tire, and the particles are fixed by the sealant material.

The pneumatic tire (sealant tire) according to the present invention is a pneumatic tire including a sealant layer located inward of an inner liner in a tire radial direction, wherein particles having a shape factor F of 5.00 to 1.00 (F = L/E, L represents a maximum dimension of the particles, E represents a minimum dimension of the particles) are provided on an inner surface of the sealant layer in the tire radial direction. Thus, the pneumatic tire (sealant tire) according to the present invention has excellent sealing performance after running while inhibiting foreign matter from adhering to the inner peripheral surface of the tire.

BRIEF DESCRIPTION OF THE DRAWINGS

FIG. 1 is an explanatory diagram schematically showing an example of an applicator used in a method for producing a sealant tire;
FIG. 2 is an enlarged view of the vicinity of the tip of a nozzle that forms a part of the applicator shown in FIG. 1;
FIG. 3 is an explanatory diagram schematically showing the positional relationship of the nozzle to a tire;
FIG. 4 is an explanatory diagram schematically showing an example of a state where a substantially string-shaped sealant material is continuously and helically attached to the inner peripheral surface of the tire;
FIG. 5 shows enlarged views of the vicinity of the tip of the nozzle that forms a part of the applicator shown in FIG. 1;
FIG. 6 is an explanatory diagram schematically showing an example of the sealant material attached to the sealant tire;
FIG. 7 is an explanatory diagram schematically showing an example of a production facility used in the method for producing the sealant tire;
FIG. 8 is an explanatory diagram schematically showing an example of a cross-section of the sealant material shown in FIG. 4 when the sealant material is cut along a straight line AA orthogonal to the direction in which the sealant material is applied (the longitudinal direction of the sealant material); and
FIG. 9 is an explanatory diagram schematically showing an example of a cross section of a pneumatic tire.

DESCRIPTION OF THE PREFERRED EMBODIMENTS

The pneumatic tire (sealant tire) according to the present invention is a pneumatic tire including a sealant layer located inward of an inner liner in the tire radial direction, wherein particles having a shape factor F of 5.00 to 1.00 (F = L/E, L represents the maximum dimension of the particles, E represents the minimum dimension of the particles) are provided on the inner surface of the sealant layer in the tire radial direction.

In the present invention, since the particles having a specific shape are provided on the inner surface of the sealant layer in the tire radial direction, foreign matter such as insects and small animals can be inhibited from adhering to the inner surface of the sealant layer in the tire radial direction, so that foreign matter can be inhibited from adhering to the inner peripheral surface (sealant layer) of the tire.

Furthermore, as described above, in the conventional art, immediately after a hole is formed by puncture-causing foreign matter (a nail becomes stuck), favorable sealing performance (initial sealing performance) is exerted after removal of the puncture-causing foreign matter, but when running is performed with the puncture-causing foreign matter stuck, favorable sealing performance (sealing performance after running) may not be obtained after the puncture-causing foreign matter is removed. As a result of a study by the present inventor, the reason for this is inferred to be that a relatively large hole cannot be closed only by the sealant material. Meanwhile, in the present invention, it is inferred that the particles having a specific shape close a hole together with the sealant material, which makes it possible to close even a relatively large hole, so that favorable sealing performance after running is obtained. In addition, favorable initial sealing performance is also obtained. Hereinafter, the initial sealing performance and the sealing performance after running are also collectively referred to as sealing performance.

In the present invention, the shape of the particles is not particularly limited as long as the particles have a specific shape factor F. However, when the shape of the particles is an elliptically spherical shape or a spherical shape, the advantageous effects (particularly, the effect of improving the sealing performance after running) are more suitably obtained.

In the present invention, the sealant layer is preferably formed by continuously and helically applying a substantially string-shaped sealant material to the inner peripheral surface of a tire. Accordingly, a sealant layer in which the sealant material is uniform (a sealant layer formed of the substantially string-shaped sealant material continuously and helically arranged along the inner peripheral surface of the tire) can be formed on the inner peripheral surface of the tire, and a sealant tire having excellent sealing performance can be stably produced with high productivity. The sealant tire obtained by this production method includes the sealant layer in which the sealant material is uniform in the tire circumferential direction and in the tire width direction (particularly, in the tire circumferential direction), and thus has excellent sealing performance. In addition, the tire is less likely to cause imbalance due to the sealant material, so that deterioration of tire uniformity can be reduced.

Furthermore, the advantageous effects are more suitably obtained by fixing the particles having a specific shape to the surface of the sealant layer by using the adhesiveness of the sealant material, and the advantageous effects are further suitably obtained by fixing the particles having a specific shape to the sealant layer, in which the sealant material is uniform, by using the adhesiveness of the sealant material. That is, the advantageous effects are further suitably obtained when the sealant layer is formed of the substantially string-shaped sealant material continuously and helically arranged along the inner peripheral surface of the tire and the particles having a specific shape are fixed by the sealant material.

In particular, the advantageous effects are more suitably obtained by using a sealant material having a later-described composition as the sealant material. Furthermore, the sealant material having the later-described composition automatically closes a hole formed at the time of puncture even in a low-temperature environment.

Regarding the sealant material having the later-described composition, specifically, an organic peroxide is used as a crosslinking agent, a material in which a liquid polymer such as liquid polybutene is blended into a rubber component including butyl-based rubber is used, and particularly two types of materials having different viscosities are used in combination as the liquid polymer, whereby the adhesiveness, the sealing performance, the fluidity, and the processability of the sealant material are improved in a balanced manner, and the above advantageous effect to be achieved by providing the particles having a specific shape on the surface of the sealant layer is more suitably obtained. Furthermore, by blending 1 to 30 parts by mass of an inorganic filler per 100 parts by mass of the rubber component, the adhesiveness, the sealing performance, the fluidity, and the processability of the sealant material are improved in a further balanced manner, and the advantageous effects are more suitably obtained.

The sealant material preferably contains an organic peroxide. Accordingly, even after the sealant material is applied, the sealant material has favorable adhesiveness, and thus can more suitably fix the particles having a specific shape. After the sealant material is applied, a later-described crosslinking step may be performed or may not be performed before the particles having a specific shape are fixed. In any of the cases, since the sealant material contains the organic peroxide, the sealant material can more suitably fix the particles having a specific shape.

Hereinafter, a preferred example of a method for producing the sealant tire according to the present invention will be described.

The sealant tire can be produced, for example, by mixing each component for forming a sealant material, to prepare a sealant material, then attaching the obtained sealant material to the inner peripheral surface of the tire by application or the like, and forming a sealant layer. The sealant tire has the sealant layer at the inner side of an inner liner in the tire radial direction.

The sealant material needs to have a viscosity controlled according to a service temperature by controlling the hardness (viscosity) thereof on the basis of the rubber component and the amount of crosslinks. For controlling the rubber component, the types and amounts of liquid rubber, a plasticizer, and carbon black are adjusted. For controlling the amount of crosslinks, the types and amounts of a crosslinking agent and a crosslinking activator are adjusted.

The sealant material is not particularly limited as long as the sealant material has adhesiveness, and a rubber composition normally used for sealing puncture of a tire can be used. A butyl-based rubber is used as a rubber component that forms a principal component of the rubber composition. Examples of the butyl-based rubber include isobutylene-isoprene-rubber (IIR) and also halogenated isobutylene-isoprene-rubbers (X-IIR) such as brominated isobutylene-isoprene-rubber (Br-IIR) and chlorinated isobutylene-isoprene-rubber (Cl-IIR). Among these rubbers, from the viewpoint of fluidity, etc., one of or both isobutylene-isoprene-rubber and a halogenated isobutylene-isoprene-rubber can be suitably used. In addition, pelletized rubber is preferably used as the butyl-based rubber. Accordingly, the butyl-based rubber can be suitably supplied to a continuous kneader with high accuracy, so that the sealant material can be produced with high productivity.

From the viewpoint of inhibiting a decrease in the fluidity of the sealant material, a butyl-based rubber A having a Mooney viscosity ML1+8 at 125°C of equal to or greater than 20 and less than 40 and/or a butyl-based rubber B having a Mooney viscosity ML1+8 at 125°C of not less than 40 and not greater than 80 is preferably used as the butyl-based rubber. Among these rubbers, at least the butyl-based rubber A is suitably used. When the butyl-based rubbers A and B are used in combination, the blending ratio therebetween may be set as appropriate.

The Mooney viscosity ML1+8 at 125°C of the butyl-based rubber A is more preferably not less than 25 and further preferably not less than 28, and is more preferably not greater than 38 and further preferably not greater than 35. If the Mooney viscosity ML1+8 is less than 20, the fluidity may decrease. If the Mooney viscosity ML1+8 is not less than 40, when the butyl-based rubbers A and B are used in combination, the advantageous effect to be achieved by these rubbers may not be obtained.

The Mooney viscosity ML 1 +8 at 125°C of the butyl-based rubber B is more preferably not less than 45 and further preferably not less than 48, and is more preferably not greater than 70 and further preferably not greater than 60. If the Mooney viscosity ML1+8 is less than 40, when the butyl-based rubbers A and B are used in combination, the advantageous effect to be achieved by these rubbers may not be obtained. If the Mooney viscosity ML1+8 exceeds 80, the sealing performance may decrease.

The Mooney viscosity ML1+8 at 125°C is measured according to JIS K-6300-1: 2001 at a test temperature of 125°C with a time for preheating a rotor having an L shape being set to 1 minute and with a time for rotating the rotor being set to 8 minutes.

As for the rubber component, another component, for example, a diene rubber such as natural rubber (NR), isoprene rubber (IR), butadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), and isobutylene-isoprene-rubber (IIR), may be used in combination. However, from the viewpoint of fluidity, etc., the amount of the butyl-based rubber contained in 100% by mass of the rubber component is preferably not less than 90% by mass, more preferably not less than 95% by mass, and particularly preferably 100% by mass.

Examples of the liquid polymer in the sealant material include liquid polybutene, liquid polyisobutene, liquid polyisoprene, liquid polybutadiene, liquid poly-$\alpha$-olefm, liquid isobutylene, liquid ethylene-$\alpha$-olefm copolymers, liquid ethylene-propylene copolymers, and liquid ethylene-butylene copolymers. Among these polymers, from the viewpoint of imparting adhesiveness, etc., liquid polybutene is preferable. Examples of the liquid polybutene include copolymers having a long-chain hydrocarbon molecular structure based on isobutene which is further reacted with normal butene. Hydrogenated liquid polybutene can also be used.

As the liquid polymer such as liquid polybutene, from the viewpoint of preventing flow of the sealant material during high speed running, a liquid polymer A having a kinematic viscosity of 550 to 625 $mm^2$/s at 100°C and/or a liquid polymer B having a kinematic viscosity of 3540 to 4010 $mm^2$/s at 100°C is preferably used, and the liquid polymers A and B are more preferably used in combination.

The kinematic viscosity at 100°C of the liquid polymer A such as liquid polybutene is preferably not less than 550 $mm^2$/s and more preferably not less than 570 $mm^2$/s. If the kinematic viscosity at 100°C is less than 550 $mm^2$/s, flow of the sealant material may occur. The kinematic viscosity at 100°C is preferably not greater than 625 $mm^2$/s and more preferably not greater than 610 $mm^2$/s. If the kinematic viscosity at 100°C exceeds 625 $mm^2$/s, the viscosity of the sealant material may become high, so that the extrudability thereof may be deteriorated.

The kinematic viscosity at 100°C of the liquid polymer B such as liquid polybutene is preferably not less than 3600 $mm^2$/s and more preferably not less than 3650 $mm^2$/s. If the kinematic viscosity at 100°C is less than 3540 $mm^2$/s, the viscosity of the sealant material may excessively decrease, so that the sealant material may easily flow during use of the tire, resulting in deterioration of sealing performance and uniformity. The kinematic viscosity at 100°C is preferably not greater than 3900 $mm^2$/s and more preferably not greater than 3800 $mm^2$/s. If the kinematic viscosity at 100°C exceeds 4010 $mm^2$/s, the sealing performance may be deteriorated.

The kinematic viscosity at 40°C of the liquid polymer A such as liquid polybutene is preferably not less than 20000 $mm^2$/s and more preferably not less than 23000 $mm^2$/s. If the kinematic viscosity at 40°C is less than 20000 $mm^2$/s, the sealant material may become soft and flow thereof may occur. The kinematic viscosity at 40°C is preferably not greater than 30000 $mm^2$/s and more preferably not greater than 28000 $mm^2$/s. If the kinematic viscosity at 40°C exceeds 30000 $mm^2$/s, the viscosity of the sealant material may become excessively high, so that the sealing performance thereof may be deteriorated.

The kinematic viscosity at 40°C of the liquid polymer B such as liquid polybutene is preferably not less than 120000 $mm^2$/s and more preferably not less than 150000 $mm^2$/s. If the kinematic viscosity at 40°C is less than 120000 $mm^2$/s, the viscosity of the sealant material may excessively decrease, so that the sealant material may easily flow during use of the tire, resulting in deterioration of sealing performance and uniformity. The kinematic viscosity at 40°C is preferably not greater than 200000 $mm^2$/s and more preferably not greater than 170000 $mm^2$/s. If the kinematic viscosity at 40°C exceeds 200000 $mm^2$/s, the viscosity of the sealant material may become excessively high, so that the sealing performance thereof may be deteriorated.

The kinematic viscosity is a value measured according to JIS K2283-2000 under a condition of 100°C or 40°C.

The amount of the liquid polymer (the total amount of the liquid polymers A and B, etc.) per 100 parts by mass of the rubber component is preferably not less than 50 parts by mass, more preferably not less than 100 parts by mass, and further preferably not less than 150 parts by mass. If the amount is less than 50 parts by mass, the adhesiveness may decrease. The amount is preferably not greater than 400 parts by mass, more preferably not greater than 300 parts by mass, and further preferably not greater than 250 parts by mass. If the amount exceeds 400 parts by mass, flow of the sealant material may occur.

When the liquid polymers A and B are used in combination, the blending ratio of these polymers (amount of liquid polymer A/amount of liquid polymer B) is preferably 10/90 to 90/10, more preferably 30/70 to 70/30, and further preferably 40/60 to 60/40. When the blending ratio is within the above range, favorable adhesiveness is imparted.

The organic peroxide (crosslinking agent) is not particularly limited, and a conventionally known compound can be used. Use of a butyl-based rubber or a liquid polymer in an organic peroxide crosslinking system improves the adhesiveness, the sealing performance, the fluidity, and the processability.

Examples of the organic peroxide include: acyl peroxides such as benzoyl peroxide, dibenzoyl peroxide, and p-chlorobenzoyl peroxide; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; and dicumyl peroxide and t-butylcumyl peroxide. Among these organic peroxides, from the viewpoint of adhesiveness and fluidity, acyl peroxides are preferable, and dibenzoyl peroxide is particularly preferable. Moreover, the organic peroxide (crosslinking agent) to be used is preferably in the form of powder. Accordingly, the organic peroxide (crosslinking agent) can be suitably supplied to a continuous kneader with high accuracy, so that the sealant material can be produced with high productivity.

The amount of the organic peroxide (crosslinking agent) per 100 parts by mass of the rubber component is preferably not less than 0.5 parts by mass, more preferably not less than 1 part by mass, and further preferably not less than 5 parts by mass. If the amount is less than 0.5 parts by mass, the crosslink density may decrease, so that flow of the sealant material may occur. The amount is preferably not greater than 40 parts by mass, more preferably not greater than 20 parts by mass, and further preferably not greater than 15 parts by mass. If the amount exceeds 40 parts by mass, the crosslink density may increase, so that the sealant material may become hard, resulting in a decrease in sealing performance.

The crosslinking activator (vulcanization accelerator) to be used may be at least one activator selected from the group consisting of sulfenamide crosslinking activators, thiazole crosslinking activators, thiuram crosslinking activators, thiourea crosslinking activators, guanidine crosslinking activators, dithiocarbamate crosslinking activators, aldehyde-amine crosslinking activators, aldehyde-ammonia crosslinking activators, imidazoline crosslinking activators, xanthate crosslinking activators, and quinone dioxime compounds (quinoid compounds). For example, quinone dioxime compounds (quinoid compounds) can be suitably used. Use of a butyl-based rubber or a liquid polymer in a crosslinking system including such a crosslinking activator added to an organic peroxide improves the adhesiveness, the sealing performance, the fluidity, and the processability.

Examples of the quinone dioxime compounds include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di(m-bromobenzoate). Among these compounds, from the viewpoint of adhesiveness, sealing performance, and fluidity, p-benzoquinone dioxime is preferable. Moreover, the crosslinking activator (vulcanization accelerator) to be used is preferably in the form of powder. Accordingly, the crosslinking activator (vulcanization accelerator) can be suitably supplied to a continuous kneader with high accuracy, so that the sealant material can be produced with high productivity.

The amount of the crosslinking activator such as quinone dioxime compounds per 100 parts by mass of the rubber component is preferably not less than 0.5 parts by mass, more preferably not less than 1 part by mass, and further preferably not less than 3 parts by mass. If the amount is less than 0.5 parts by mass, flow of the sealant material may occur. The amount is preferably not greater than 40 parts by mass, more preferably not greater than 20 parts by mass, and further preferably not greater than 15 parts by mass. If the amount exceeds 40 parts by mass, the sealing performance may decrease.

An inorganic filler such as carbon black, silica, calcium carbonate, calcium silicate, magnesium oxide, aluminum oxide, barium sulfate, talc, and mica, and a plasticizer such as aromatic process oil, naphthenic process oil, and paraffinic process oil may be added to the sealant material.

The amount of the inorganic filler per 100 parts by mass of the rubber component is preferably not less than 1 part by mass and more preferably not less than 10 parts by mass. If the amount is less than 1 part by mass, the sealing performance may decrease due to degradation by ultraviolet rays. The amount is preferably not greater than 50 parts by mass, more preferably not greater than 40 parts by mass, and further preferably not greater than 30 parts by mass. If the amount exceeds 50 parts by mass, the viscosity of the sealant material may become excessively high, so that the sealing performance thereof may be deteriorated.

From the viewpoint of preventing degradation by ultraviolet rays, carbon black is preferable as the inorganic filler. In this case, the amount of carbon black per 100 parts by mass of the rubber component is preferably not less than 1 part by mass and more preferably not less than 10 parts by mass. If the amount is less than 1 part by mass, the sealing performance may decrease due to degradation by ultraviolet rays. The amount is preferably not greater than 50 parts by mass, more preferably not greater than 40 parts by mass, and further preferably not greater than 25 parts by mass. If the amount exceeds 50 parts by mass, the viscosity of the sealant material may become excessively high, so that the sealing performance thereof may be deteriorated.

The amount of the plasticizer per 100 parts by mass of the rubber component is preferably not less than 1 part by mass and more preferably not less than 5 parts by mass. If the amount is less than 1 part by mass, the adhesiveness to tires may be decreased, so that sufficient sealing performance may not be obtained. The amount is preferably not greater than 40 parts by mass and more preferably not greater than 20 parts by mass. If the amount exceeds 40 parts by mass, the sealant material may slide in a kneader, so that it may be difficult to knead the sealant material.

The sealant material is preferably prepared by mixing a pelletized butyl-based rubber, a powdered crosslinking agent, and a powdered crosslinking activator, more preferably by mixing a pelletized butyl-based rubber, liquid polybutene, a plasticizer, carbon black powder, a powdered crosslinking agent, and a powdered crosslinking activator. Accordingly, the respective raw materials can be suitably supplied to a continuous kneader, so that the sealant material can be produced with high productivity.

The sealant material is preferably obtained by blending a rubber component including isobutylene-isoprene-rubber with predetermined amounts of a liquid polymer, an organic peroxide, and a crosslinking activator.

The adhesiveness, the sealing performance, the fluidity, and the processability of the sealant material are improved in a balanced manner by using, as the sealant material, a material obtained by blending isobutylene-isoprene-rubber with a liquid polymer such as liquid polybutene, particularly using two types having different viscosities as each of the isobutylene-isoprene-rubber and the liquid polymer. As the reason for this, introduction of a liquid polymer component to an organic peroxide crosslinking system including isobutylene-isoprene-rubber used as the rubber component imparts adhesiveness to the sealant material, and particularly the use of liquid polymers having different viscosities and solid isobutylene-isoprene-rubber inhibits flow of the sealant material during high speed running, whereby the adhesiveness, the sealing performance, the fluidity, and the processability are improved in a balanced manner.

The viscosity (40°C) of the sealant material is not particularly limited. From the viewpoint of, for example, adhesiveness, fluidity, and the sealant material suitably retaining its substantially string shape at the time when the sealant material is applied to the inner peripheral surface of the tire, the viscosity is preferably not less than 3000 Pa·s and more preferably not less than 5000 Pa·s, and is preferably not greater than 70000 Pa·s and more preferably not greater than 50000 Pa·s. If the viscosity is less than 3000 Pa·s, when the tire is stopped after application of the sealant material, the sealant material may flow and may not be able to maintain its thickness. If the viscosity exceeds 70000 Pa·s, it becomes difficult to discharge the sealant material from a nozzle. The viscosity of the sealant material is a value measured according to JIS K 6833 at 40°C with a rotational viscometer.

A sealant tire including a sealant layer located inward of an inner liner in the tire radial direction can be produced by mixing the aforementioned respective materials to prepare a sealant material and applying the produced sealant material to the inner peripheral surface of a tire (preferably, an inner portion of an inner liner in the tire radial direction). The respective materials for forming the sealant material can be mixed, for example, using known continuous kneaders. The materials are preferably mixed using a co-rotating or counter-rotating multi-screw kneading extruder, and particularly a twin-screw kneading extruder, among these known continuous kneaders.

The continuous kneader (particularly, the twin-screw kneading extruder) preferably has a plurality of supply ports for supplying raw materials, more preferably at least three supply ports, and further preferably at least three supply ports including upstream, midstream, and downstream supply ports. By sequentially supplying the raw materials to the continuous kneader (particularly, the twin-screw kneading extruder), the raw materials are mixed, and a sealant material is sequentially and continuously is prepared.

Preferably, the raw materials are sequentially supplied to the continuous kneader (particularly, the twin-screw kneading extruder) in order of the raw materials having a higher viscosity. Accordingly, the respective materials can be sufficiently mixed, so that a sealant material having a constant quality can be prepared. Moreover, powder materials improve kneadability when being fed, and thus are desirably fed at a position as upstream as possible.

The organic peroxide is preferably supplied through the downstream supply port of the continuous kneader (particularly, the twin-screw kneading extruder). Accordingly, the time period from the supply of the organic peroxide to application of the sealant material to the tire can be shortened, and thus the sealant material can be applied to the tire before curing of the sealant material proceeds, so that a sealant tire can be more stably produced.

Since kneading is unsuccessfully accomplished when a large amount of a liquid polymer is fed at one time into the continuous kneader (particularly, the twin-screw kneading extruder), the liquid polymer is preferably supplied to the continuous kneader (particularly, the twin-screw kneading extruder) through a plurality of supply ports. Accordingly, the sealant material can be more suitably kneaded.

When the continuous kneader (particularly, the twin-screw kneading extruder) is used, the sealant material is preferably prepared using the continuous kneader (particularly, the twin-screw kneading extruder) having at least three supply ports, by supplying the rubber component such as a butyl-based rubber, the inorganic filler, and the crosslinking activator through an upstream supply port of the continuous kneader (particularly, the twin-screw kneading extruder), supplying the liquid polymer B through a midstream supply port, supplying the liquid polymer A, the organic peroxide, and the plasticizer through a downstream supply port, and performing kneading and extrusion. The respective materials such as the liquid polymer may be entirely or partially supplied through the respective supply ports. Preferably, 95% by mass or more of the entire amount of each material is supplied through the supply port.

Preferably, all the raw materials to be supplied to the continuous kneader are fed into the continuous kneader under control of a feeder capable of quantitative supply control. Accordingly, it is possible to continuously prepare the sealant material in an automated manner.

The feeder is not particularly limited as long as the feeder is capable of quantitative supply control, known feeders can be used, and, for example, screw feeders, plunger pumps, gear pumps, and mohno pumps can be used.

Preferably, solid raw materials (particularly, pellets or powder) such as a pelletized butyl-based rubber, carbon black powder, a powdered crosslinking agent, and a powdered crosslinking activator are quantitatively supplied using a screw feeder. Accordingly, it is possible to accurately and quantitatively supply the solid raw materials, thereby enabling production of a sealant material having a higher quality and therefore a sealant tire having a higher quality.

Moreover, the solid raw materials are preferably individually supplied using separate feeders. Accordingly, the raw materials do not need to be blended beforehand, which facilitates supply of the materials in mass production.

The plasticizer is preferably quantitatively supplied using a plunger pump. Accordingly, it is possible to accurately and quantitatively supply the plasticizer, thereby enabling production of a sealant material having a higher quality and therefore a sealant tire having a higher quality.

The liquid polymer is preferably quantitatively supplied using a gear pump. Accordingly, it is possible to accurately and quantitatively supply the liquid polymer, thereby enabling production of a sealant material having a higher quality and therefore a sealant tire having a higher quality.

The liquid polymer to be supplied is preferably kept at a constant temperature. By keeping the liquid polymer at a constant temperature, it is possible to accurately and quantitatively supply the liquid polymer. The temperature of the liquid polymer to be supplied is preferably 20 to 90°C and more preferably 40 to 70°C.

From the viewpoint of ease of mixing, extrudability, dispersibility, and crosslinking reaction, the mixing with the continuous kneader (particularly, the twin-screw kneading extruder) is preferably carried out at a barrel temperature of 30°C (preferably, 50°C) to 150°C.

From the viewpoint of sufficient mixing, preferably, the time for mixing the materials supplied upstream is 1 to 3 minutes, and the time for mixing the materials supplied midstream is 1 to 3 minutes. From the viewpoint of preventing crosslinking, the time for mixing the materials supplied downstream is preferably 0.5 to 2 minutes. Each of the mixing times refers to the residence time in the continuous kneader (particularly, the twin-screw kneading extruder) from supply to discharge. For example, the time for mixing the materials supplied downstream is the residence time from supply of the materials to a downstream supply port until discharge of the materials.

By the screw rotational speed of the continuous kneader (particularly, the twin-screw kneading extruder) and setting of a temperature controller, the temperature of the sealant material discharged from a discharge port can be adjusted, and further the rate of curing acceleration of the sealant material can be controlled. When the screw rotational speed of the continuous kneader (particularly, the twin-screw kneading extruder) is increased, the kneadability and the material temperature increase. The screw rotational speed does not influence the discharge amount. From the viewpoint of sufficient mixing and control of the rate of curing acceleration, the screw rotational speed is preferably 50 to 700 (preferably 550) rpm.

From the viewpoint of sufficient mixing and control of the rate of curing acceleration, the temperature of the sealant material discharged from the discharge port of the continuous kneader (particularly, the twin-screw kneading extruder) is preferably 70 to 150°C and more preferably 90 to 130°C. When the temperature of the sealant material is within the above range, the crosslinking reaction starts from the application of the sealant material and the sealant material has favorable adhesiveness to the inner peripheral surface of the tire, and also the crosslinking reaction more suitably proceeds, whereby a sealant tire having high sealing performance can be produced. In addition, in this case, the later-described crosslinking step is not required.

The amount of the sealant material discharged from the discharge port of the continuous kneader (particularly, the twin-screw kneading extruder) is determined on the basis of the amounts of the raw materials supplied to the supply ports. The amounts of the raw materials supplied to the supply ports are not particularly limited, and can be set as appropriate by a person skilled in the art.

For the reason that a sealant tire having more excellent uniformity and sealing performance is suitably obtained, the amount (discharge amount) of the sealant material discharged from the discharge port is preferably substantially constant.

Here, in the present specification, the substantially constant discharge amount means that the discharge amount varies within a range of 93 to 107% (preferably 97 to 103%, more preferably 98 to 102%, further preferably 99 to 101%).

A nozzle is preferably connected to the discharge port of the continuous kneader (particularly, the twin-screw kneading extruder). Since the continuous kneader (particularly, the twin-screw kneading extruder) can discharge the materials at a high pressure, when a nozzle (preferably a small-diameter nozzle which creates high resistance) is mounted to the discharge port, the prepared sealant material can be attached to the tire in the form of a substantially thin string (bead). That is, by discharging the sealant material from the nozzle connected to the continuous kneader (particularly, the twin-screw kneading extruder) and sequentially applying the sealant material to the inner peripheral surface of the tire, the applied sealant material has a substantially uniform thickness, whereby deterioration of tire uniformity can be prevented, and a sealant tire having excellent weight balance can be produced.

Next, for example, the mixed sealant material is discharged from the nozzle connected to the discharge port of an extruder such as the continuous kneader (particularly, the twin-screw kneading extruder), and is directly fed and applied to the inner peripheral surface of a vulcanized tire, whereby a sealant tire is produced. Accordingly, since the sealant material that has been mixed in the twin-screw kneading extruder or the like and further in which progress of the crosslinking reaction in the extruder is inhibited is directly applied to the inner peripheral surface of the tire, the crosslinking reaction starts upon the application of the sealant material and the sealant material has favorable adhesiveness to the inner peripheral surface of the tire, and also the crosslinking reaction suitably proceeds. Due to this, the sealant material applied to the inner peripheral surface of the tire suitably forms a sealant layer while retaining a substantially string shape. Therefore, sealant application and processing can be enabled in a series of steps, so that the productivity further improves. Moreover, the application of the sealant material to the inner peripheral surface of a vulcanized tire allows a sealant tire to be produced with high productivity. Furthermore, the sealant material discharged from the nozzle connected to the discharge port of the continuous kneader (particularly, the twin-screw kneading extruder) is preferably sequentially applied directly to the inner peripheral surface of the tire. Accordingly, since the sealant material in which progress of the crosslinking reaction in the continuous kneader (particularly, the twin-screw kneading extruder) is inhibited can be directly and continuously applied to the inner peripheral surface of the tire, the crosslinking reaction starts upon the application of the sealant material and the sealant material has favorable adhesiveness to the inner peripheral surface of the tire, and also the crosslinking reaction suitably proceeds, whereby a sealant tire having excellent weight balance can be produced with higher productivity.

With regard to the application of the sealant material to the inner peripheral surface of the tire, the sealant material may be applied to at least an inner peripheral surface of the tire corresponding to the tread portion of the tire, more preferably to at least an inner peripheral surface of the tire corresponding to the breaker of the tire. Omitting the application of the sealant material to areas where application of the sealant material is unnecessary allows a sealant tire to be produced with higher productivity.

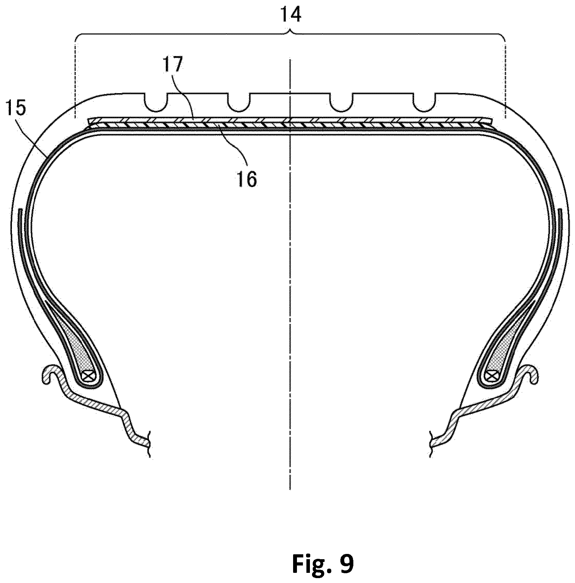

Here, the inner peripheral surface of the tire corresponding to the tread portion of the tire refers to an inner peripheral surface of the tire located inward of the tread portion, which contacts with a road surface, in the tire radial direction, and the inner peripheral surface of the tire corresponding to the breaker of the tire refers to an inner peripheral surface of the tire located inward of the breaker in the tire radial direction. The breaker refers to a component disposed inside the tread and outward of a carcass in the radial direction. Specifically, the breaker is a component shown as a breaker 16 in FIG. 9, or the like.

Normally, an unvulcanized tire is vulcanized using a bladder. During vulcanization, the bladder expands and comes into close contact with the inner peripheral surface (inner liner) of the tire. Thus, a mold release agent is normally applied to the inner peripheral surface (inner liner) of the tire to prevent adhesion between the bladder and the inner peripheral surface (inner liner) of the tire when vulcanization is finished.

A water-soluble paint or a mold-releasing rubber is normally used as the mold release agent. However, the presence of the mold release agent on the inner peripheral surface of the tire may decrease the adhesiveness between the sealant material and the inner peripheral surface of the tire. For this reason, the mold release agent is preferably removed in advance from the inner peripheral surface of the tire. In particular, the mold release agent is more preferably removed in advance at least from a portion of the inner peripheral surface of the tire on which application of the sealant material is started. The mold release agent is further preferably removed in advance from the entirety of the inner peripheral surface of the tire to which the sealant material is to be applied. Accordingly, the adhesion of the sealant material to the inner peripheral surface of the tire improves, so that a sealant tire having higher sealing performance can be produced.

The method for removing the mold release agent from the inner peripheral surface of the tire is not particularly limited, and examples thereof include known methods such as buffing treatment, laser treatment, high pressure water washing, and removal with a detergent (preferably, a neutral detergent).

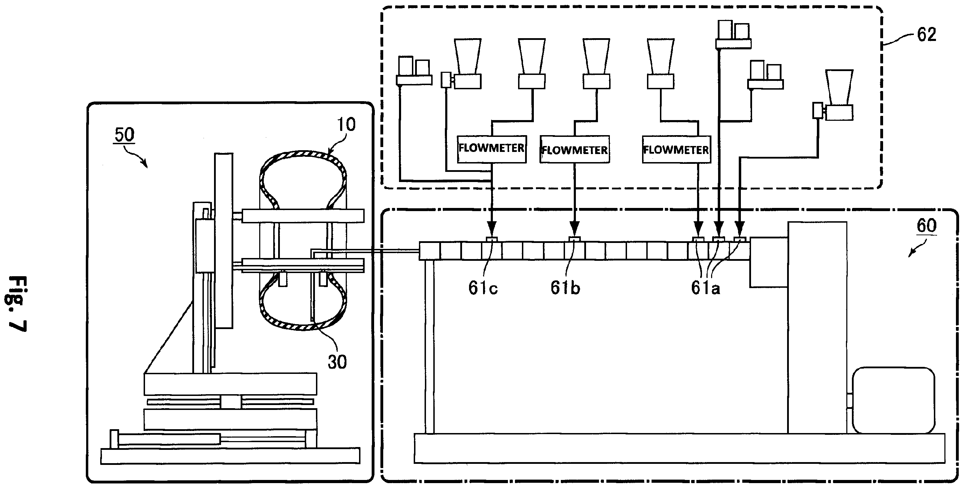

Here, an example of a production facility used in the method for producing the sealant tire will be briefly described with reference to FIG. 7.

The production facility includes a twin-screw kneading extruder 60, a material feeder 62 for supplying raw materials to the twin-screw kneading extruder 60, and a rotary drive device 50 that fixes and rotates a tire 10 while moving the tire 10 in the width direction and the radial direction of the tire 10. The twin-screw kneading extruder 60 has five supply ports 61. Specifically, the twin-screw kneading extruder 60 has three upstream supply ports 61 a, one midstream supply port 61b, and one downstream supply port 61c. Furthermore, the twin-screw kneading extruder 60 has a discharge port to which a nozzle 30 is connected.

The raw materials are sequentially supplied from the material feeder 62 to the twin-screw kneading extruder 60 through the supply ports 61 of the twin-screw kneading extruder 60 and then kneaded by the twin-screw kneading extruder 60, whereby the sealant material is sequentially prepared. The prepared sealant material is continuously discharged from the nozzle 30, which is connected to the discharge port of the twin-screw kneading extruder 60. The tire is traversed and/or moved up and down (moved in the width direction and/or the radial direction of the tire), while being rotated, by the tire drive device, and the sealant material discharged from the nozzle 30 is sequentially applied directly to the inner peripheral surface of the tire, whereby the sealant material can be continuously and helically attached to the inner peripheral surface of the tire. That is, the sealant material can be continuously and helically attached to the inner peripheral surface of the tire by sequentially applying the sealant material continuously discharged from the continuous kneader (particularly, the twin-screw kneading extruder), directly to the inner peripheral surface of the tire while rotating and simultaneously moving the tire in the tire width direction and/or radial direction.

The continuous and helical attachment of the sealant material to the inner peripheral surface of the tire can prevent deterioration of tire uniformity, thereby enabling production of a sealant tire having excellent weight balance. In addition, the continuous and helical attachment of the sealant material to the inner peripheral surface of the tire allows formation of a sealant layer in which the sealant material is uniform in the tire circumferential direction and the tire width direction (particularly, the tire circumferential direction). Thus, a sealant tire having excellent sealing performance can be stably produced with high productivity. The sealant material is attached preferably without overlapping in the width direction and more preferably without gaps. Accordingly, deterioration of tire uniformity can be more prevented and a more uniform sealant layer can be formed.

The raw materials are sequentially supplied to the continuous kneader (particularly, the twin-screw kneading extruder), and the sealant material is sequentially prepared by the continuous kneader (particularly, the twin-screw kneading extruder). The prepared sealant material is continuously discharged from the nozzle connected to the discharge port of the continuous kneader (particularly, the twin-screw kneading extruder), and the discharged sealant material is sequentially applied directly to the inner peripheral surface of the tire. Accordingly, a sealant tire can be produced with high productivity.

The sealant layer is preferably formed by continuously and helically applying a substantially string-shaped sealant material to the inner peripheral surface of the tire. Accordingly, a sealant layer formed of the substantially string-shaped sealant material continuously and helically arranged along the inner peripheral surface of the tire can be formed on the inner peripheral surface of the tire. The sealant layer may be formed of a laminate of the sealant material, but is preferably composed of one layer of the sealant material.

In the case where the sealant material has a substantially string shape, a sealant layer composed of one layer of the sealant material can be formed by continuously and helically applying the sealant material to the inner peripheral surface of the tire. In the case where the sealant material has a substantially string shape, the applied sealant material has a certain thickness, and thus even a sealant layer composed of one layer of the sealant material can prevent deterioration of tire uniformity, so that a sealant tire having excellent weight balance and favorable sealing performance can be produced. Moreover, since it is sufficient to only apply one layer of the sealant material without laminating layers of the sealant material, a sealant tire can be produced with higher productivity.

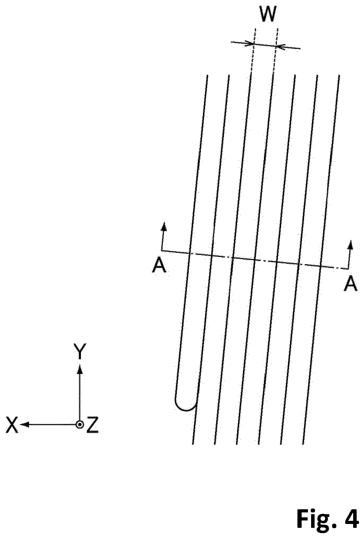

For the reason that deterioration of tire uniformity can be prevented and a sealant tire having excellent weight balance and favorable sealing performance can be produced with higher productivity, the number of turns of the sealant material on the inner peripheral surface of the tire is preferably 20 to 70, more preferably 20 to 60, and further preferably 35 to 50. Here, two turns means that the sealant material is applied such that the sealant material makes two turns on the inner peripheral surface of the tire. In FIG. 4, the number of turns of the sealant material is six.

The use of the continuous kneader (particularly, the twin-screw kneading extruder) allows preparation (kneading) of the sealant material and discharge (application) of the sealant material to be simultaneously and continuously performed, so that the sealant material that has a high viscosity and high adhesiveness and is difficult to handle can be applied directly to the inner peripheral surface of the tire without handling the sealant material, and a sealant tire can be produced with high productivity. When the sealant material is prepared by kneading the raw materials including a curing agent using a batch type kneader, the time period from the preparation of the sealant material to application of the sealant material to the tire is not constant. When the sealant material is sequentially prepared by mixing the raw materials including the organic peroxide using the continuous kneader (particularly, the twin-screw kneading extruder) and is sequentially applied to the inner peripheral surface of the tire, the time period from the preparation of the sealant material to the application of the sealant material to the tire is constant. Therefore, when the sealant material is applied using a nozzle, the amount of the sealant material discharged from the nozzle is stable, and, further, the adhesiveness of the sealant material to the tire is inhibited from decreasing and also becomes constant. Accordingly, even when the sealant material that has a high viscosity and high adhesiveness and is difficult to handle is used, the sealant material can be applied to the inner peripheral surface of the tire with high accuracy, so that a sealant tire having a constant quality can be stably produced.

Next, a method for applying the sealant material to the inner peripheral surface of the tire will be described below.

<First Embodiment>

In a first embodiment, a sealant tire can be produced, for example, by performing a step (1), a step (2), and a step (3) in applying the adhesive sealant material to the inner peripheral surface of a tire while rotating the tire and moving at least one of the tire and a nozzle in the tire width direction. The step (1) is a step of measuring the distance between the inner peripheral surface of the tire and the tip of the nozzle using a non-contact displacement sensor, the step (2) is a step of adjusting the gap between the inner peripheral surface of the tire and the tip of the nozzle to a predetermined distance by moving at least one of the tire and the nozzle in the tire radial direction on the basis of the result of the measurement, and the step (3) is a step of applying the sealant material to the inner peripheral surface of the tire the gap of which has been adjusted.

The gap between the inner peripheral surface of the tire and the tip of the nozzle can be maintained at a constant distance by measuring the distance between the inner peripheral surface of the tire and the tip of the nozzle using the non-contact displacement sensor and feeding back the result of the measurement. Since the sealant material is applied to the inner peripheral surface of the tire with the gap maintained at a constant distance, the thickness of the sealant material can be uniform without being influenced by variations in tire shape, irregularities at joint portions, or the like. Furthermore, it is not necessary to enter coordinate values for each tire size as in the conventional art, and thus the sealant material can be efficiently applied.

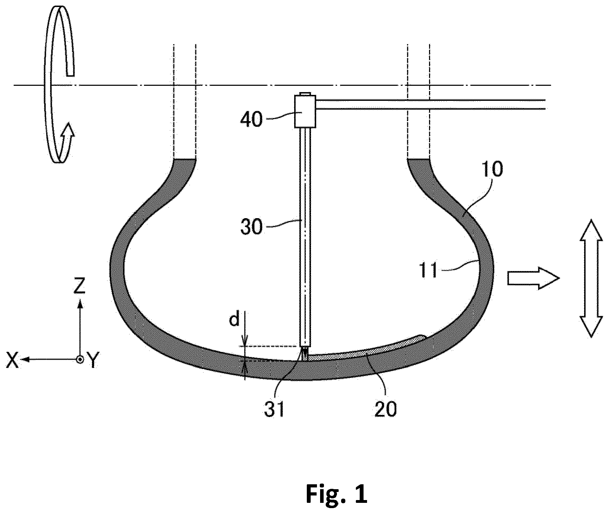

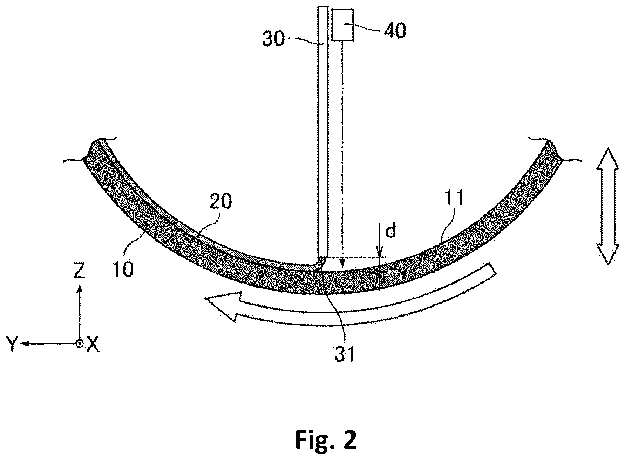

FIG. 1 is an explanatory diagram schematically showing an example of an applicator used in the method for producing the sealant tire. FIG. 2 is an enlarged view of the vicinity of the tip of a nozzle that forms a part of the applicator shown in FIG. 1.

FIG. 1 shows a cross-section of a part of the tire 10 in the meridian direction (a cross-section taken along a plane including the tire width direction and radial direction), and FIG. 2 shows a cross-section of a part of the tire 10 taken along a plane including the tire circumferential direction and radial direction. In FIGS. 1 and 2, an X direction is the tire width direction (axial direction), a Y direction is the tire circumferential direction, and a Z direction is the tire radial direction.

The tire 10 is mounted on a rotary drive device (not shown) that fixes and rotates a tire while moving the tire in the tire width direction and radial direction. The rotary drive device independently enables rotation of the tire about the axis of the tire, movement of the tire in the width direction, and movement of the tire in the radial direction.

The rotary drive device includes a control mechanism (not shown) capable of controlling the amount of movement of the tire in the radial direction. The control mechanism may be capable of controlling the amount of movement of the tire in the width direction and/or the rotational speed of the tire.

A nozzle 30 is mounted on an end of an extruder (not shown) and can be inserted into the inside of the tire 10. An adhesive sealant material 20 extruded from the extruder is discharged from a tip 31 of the nozzle 30.

A non-contact displacement sensor 40 is mounted on the nozzle 30 and measures a distance d between an inner peripheral surface 11 of the tire 10 and the tip 31 of the nozzle 30. As described above, the distance d measured with the non-contact displacement sensor is the distance in the tire radial direction between the inner peripheral surface of the tire and the tip of the nozzle.

In the method for producing the sealant tire according to the present embodiment, first, the tire 10 formed through a vulcanization step is mounted to the rotary drive device, and the nozzle 30 is inserted into the inside of the tire 10. Then, as shown in FIGS. 1 and 2, the sealant material 20 is continuously applied to the inner peripheral surface 11 of the tire 10 by discharging the sealant material 20 from the nozzle 30 while rotating the tire 10 and moving the tire 10 in the width direction. The tire 10 is moved in the width direction along a pre-entered profile shape of the inner peripheral surface 11 of the tire 10.

As will be described later, the sealant material 20 preferably has a substantially string shape. More specifically, the sealant material preferably retains a substantially string shape when the sealant material is applied to the inner peripheral surface of the tire. In this case, the substantially string-shaped sealant material 20 is continuously and helically attached to the inner peripheral surface 11 of the tire 10.

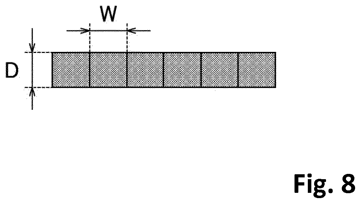

In the present specification, the substantially string shape refers to a shape having a certain width and a certain thickness and having a length longer than the width. FIG. 4 schematically shows an example of a state where the substantially string-shaped sealant material is continuously and helically attached to the inner peripheral surface of the tire. FIG. 8 schematically shows an example of a cross-section of the sealant material in FIG. 4 when the sealant material is cut along a straight line AA orthogonal to the direction in which the sealant material is applied (the longitudinal direction of the sealant material). As shown, the substantially string-shaped sealant material has a certain width (a length indicated by W in FIG. 8) and a certain thickness (a length indicated by D in FIG. 8). The width of the sealant material means the width of the applied sealant material. The thickness of the sealant material means the thickness of the applied sealant material and more specifically means the thickness of the sealant layer.

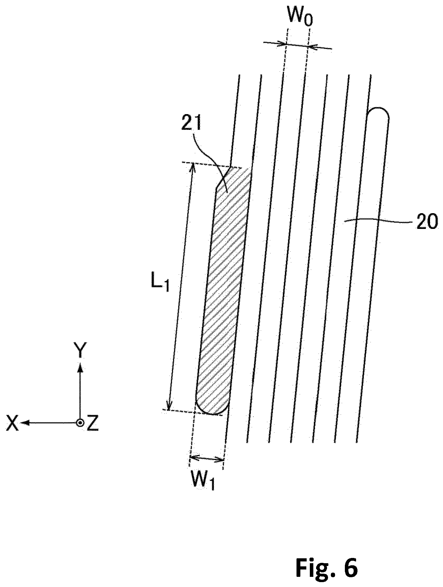

Specifically, the substantially string-shaped sealant material is a sealant material having a thickness (the thickness of the applied sealant material, the thickness of the sealant layer, the length indicated by D in FIG. 8) satisfying a preferable numerical range and a width (the width of the applied sealant material, the length indicated by W in FIG. 4, a length indicated by $W_0$ in FIG. 6) satisfying a preferable numerical range as described later, and is more preferably a sealant material having a ratio of the thickness of the sealant material to the width of the sealant material (thickness of sealant material/width of sealant material) satisfying a preferable numerical range as described later. The substantially string-shaped sealant material is also a sealant material having a cross-sectional area satisfying a preferable numerical range as described later.

In the method for producing the sealant tire according to the present embodiment, the sealant material is applied to the inner peripheral surface of the tire by the following steps (1) to (3).

<Step (1)>

As shown in FIG. 2, the distance d between the inner peripheral surface 11 of the tire 10 and the tip 31 of the nozzle 30 is measured with the non-contact displacement sensor 40 before the application of the sealant material 20. The distance d is measured every time the sealant material 20 is applied to the inner peripheral surface 11 of each tire 10, and is measured from the start of the application of the sealant material 20 to the end of the application.

<Step (2)>

The measurement data of the distance d is transmitted to the control mechanism of the rotary drive device. The control mechanism adjusts the amount of movement of the tire 10 in the radial direction on the basis of the measurement data such that the gap between the inner peripheral surface 11 of the tire and the tip 31 of the nozzle 30 is a predetermined distance.

<Step (3)>

The sealant material 20 is continuously discharged from the tip 31 of the nozzle 30 and therefore is applied to the inner peripheral surface 11 of the tire 10 the gap of which has been adjusted. Through the above steps (1) to (3), the sealant material 20 having a uniform thickness can be applied to the inner peripheral surface 11 of the tire 10.

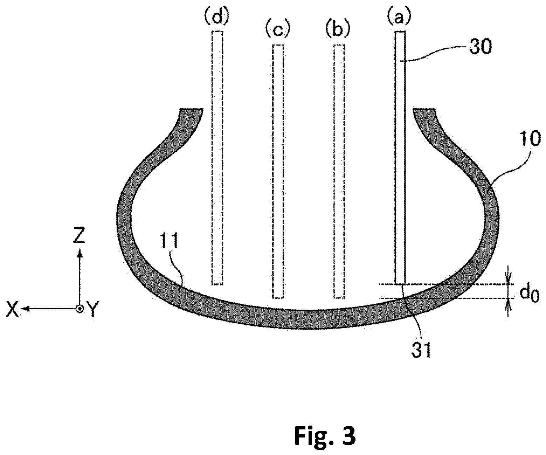

FIG. 3 is an explanatory diagram schematically showing the positional relationship of the nozzle to the tire. As shown in FIG. 3, the sealant material can be applied while the gap between the inner peripheral surface 11 of the tire 10 and the tip 31 of the nozzle 30 is maintained at a predetermined distance do during movement of the nozzle 30 to positions indicated by (a) to (d) relative to the tire 10.

For the reason that the advantageous effects are more suitably achieved, the adjusted gap $d_0$ is preferably not less than 0.3 mm and more preferably not less than 1.0 mm. If the adjusted gap $d_0$ is less than 0.3 mm, the tip of the nozzle becomes excessively close to the inner peripheral surface of the tire, and thus it is difficult to apply the sealant material having a predetermined thickness. The adjusted gap $d_0$ is also preferably not greater than 3.0 mm and more preferably not greater than 2.0 mm. If the adjusted gap $d_0$ exceeds 3.0 mm, the sealant material may not be attached well to the tire, so that the production efficiency may be decreased.

Here, the adjusted gap $d_0$ is the distance in the tire radial direction between the inner peripheral surface of the tire and the tip of the nozzle after the adjustment in the step (2).

For the reason that the advantageous effects are more suitably achieved, the adjusted gap $d_0$ is preferably not greater than 30% and more preferably not greater than 20% of the thickness of the applied sealant material, and is preferably not less than 5% and more preferably not less than 10% of the thickness of the applied sealant material.

The thickness of the sealant material (the thickness of the applied sealant material, the thickness of the sealant layer, the length indicated by D in FIG. 8) is not particularly limited. For the reason that the advantageous effects are more suitably achieved, the thickness of the sealant material is preferably not less than 1.0 mm, more preferably not less than 1.5 mm, further preferably not less than 2.0 mm, and particularly preferably not less than 2.5 mm, and is preferably not greater than 10.0 mm, more preferably not greater than 8.0 mm, and further preferably not greater than 5.0 mm. If the thickness of the sealant material is less than 1.0 mm, it is difficult to assuredly close a puncture hole when the tire is punctured. In addition, if the thickness of the sealant material exceeds 10.0 mm, the effect of closing a puncture hole does not change much, and the weight of the tire is increased. Thus, the thickness of the sealant material exceeding 10.0 mm is not preferable. The thickness of the sealant material can be adjusted by adjusting the rotational speed of the tire, the speed of movement of the tire in the width direction, the distance between the tip of the nozzle and the inner peripheral surface of the tire, or the like.

The thickness of the sealant material (the thickness of the applied sealant material, the thickness of the sealant layer) is preferably substantially uniform. Accordingly, deterioration of tire uniformity can be prevented more reliably, so that a sealant tire having more excellent weight balance can be produced. Here, in the present specification, the substantially uniform thickness means that the thickness varies within a range of 90 to 110% (preferably, 95 to 105%, more preferably 98 to 102%, further preferably 99 to 101%).

For the reason that clogging of the nozzle is reduced so that the operation stability is excellent and for the reason that the advantageous effects are more suitably achieved, a substantially string-shaped sealant material is preferably used and is more preferably helically attached to the inner peripheral surface of the tire. However, a sealant material that does not have a substantially string shape may be used and applied by spraying the sealant material onto the inner peripheral surface of the tire.

In the case of using a substantially string-shaped sealant material, the width of the sealant material (the width of the applied sealant material, the length indicated by W in FIG. 4) is not particularly limited. For the reason that the advantageous effects are more suitably achieved, the width of the sealant material is preferably not less than 0.8 mm, more preferably not less than 1.3 mm, and further preferably not less than 1.5 mm. If the width of the sealant material is less than 0.8 mm, the number of turns of the sealant material on the inner peripheral surface of the tire increases, so that the production efficiency may be decreased. The width of the sealant material is also preferably not greater than 18 mm, more preferably not greater than 13 mm, further preferably not greater than 9.0 mm, particularly preferably not greater than 7.0 mm, most preferably not greater than 6.0 mm, and still most preferably not greater than 5.0 mm. If the width of the sealant material exceeds 18 mm, weight imbalance may easily occur.

The ratio of the thickness of the sealant material (the thickness of the applied sealant material, the thickness of the sealant layer, the length indicated by D in FIG. 8) to the width of the sealant material (the width of the applied sealant material, the length indicated by W in FIG. 4) (thickness of sealant material/width of sealant material) is preferably 0.6 to 1.4, more preferably 0.7 to 1.3, further preferably 0.8 to 1.2, and particularly preferably 0.9 to 1.1. The ratio being closer to 1.0 results in a sealant material having an ideal string shape, so that a sealant tire having high sealing performance can be produced with high productivity.

For the reason that the advantageous effects are more suitably achieved, the cross-sectional area of the sealant material (the cross-sectional area of the applied sealant material, the area calculated by D × W in FIG. 8) is preferably not less than 0.8 mm$^2$, more preferably not less than 1.95 mm$^2$, further preferably not less than 3.0 mm$^2$, and particularly preferably not less than 3.75 mm$^2$, and is preferably not greater than 180 mm$^2$, more preferably not greater than 104 mm$^2$, further preferably not greater than 45 mm$^2$, particularly preferably not greater than 35 mm$^2$, and most preferably not greater than 25 mm$^2$.

The width of the region where the sealant material is attached (hereinafter, also referred to as the width of the attached region or the width of the sealant layer, and corresponding to the length represented by 6 × W in FIG. 4 and the length represented by $W_1 + 6 \times W_0$ in FIG. 6) is not particularly limited. For the reason that the advantageous effects are more suitably achieved, the width of the region is preferably not less than 80%, more preferably not less than 90%, and further preferably not less than 100% of a tread ground-contact width, and is preferably not greater than 120% and more preferably not greater than 110% of the tread ground-contact width.

For the reason that the advantageous effects are more suitably achieved, the width of the sealant layer is preferably 85 to 115% and more preferably 95 to 105% of the breaker width of the tire (the length of the breaker in the tire width direction).

In the present specification, in the case where the tire is provided with a plurality of breakers, the length of the breaker in the tire width direction refers to the length of the longest breaker in the tire width direction among the plurality of breakers.

In the present specification, the tread ground-contact width is defined as follows. First, a ground contact position at the outermost side in the tire axial direction when: a normal load is applied to the tire in a normal state where the tire is mounted to a normal rim and inflated to a normal internal pressure and no load is applied to the tire; and the tire is brought into contact with a plane at a camber angle of 0 degrees, is defined as a "ground-contact edge" Te. The distance in the tire axial direction between the ground-contact edges Te, Te is defined as a tread ground-contact width TW. Unless otherwise specified, dimensions of the respective components of the tire and the like are values measured in the normal state.

The "normal rim" is a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard. The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case where the tire is a tire for a passenger car, the "normal internal pressure" is 180 kPa.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case where the tire is a tire for a passenger car, the "normal load" is a load equivalent to 88% of the above load.

The rotational speed of the tire during the application of the sealant material is not particularly limited. For the reason that the advantageous effects are more suitably achieved, the rotational speed of the tire is preferably not less than 5 m/min and more preferably not less than 10 m/min, and is preferably not greater than 30 m/min and more preferably not greater than 20 m/min. If the rotational speed of the tire is less than 5 m/min or exceeds 30 m/min, it is difficult to apply the sealant material having a uniform thickness.

The use of the non-contact displacement sensor can reduce the risk of a breakdown due to the sealant material adhering to the sensor. The non-contact displacement sensor used in the present invention is not particularly limited as long as the sensor can measure the distance between the inner peripheral surface of the tire and the tip of the nozzle. Examples of the non-contact displacement sensor include laser sensors, photosensors, and capacitance sensors. These sensors may be used singly, or two or more of these sensors may be used in combination. Among these sensors, from the viewpoint of measuring rubber, laser sensors and photosensors are preferable, and laser sensors are more preferable. In the case of using a laser sensor, the distance between the inner peripheral surface of the tire and the tip of the nozzle can be determined by: applying a laser to the inner peripheral surface of the tire; measuring the distance between the inner peripheral surface of the tire and the tip of the laser sensor on the basis of reflection of the laser; and subtracting the distance between the tip of the laser sensor and the tip of the nozzle from the value of the measured distance.

The position of the non-contact displacement sensor is not particularly limited as long as the distance between the inner peripheral surface of the tire and the tip of the nozzle before the application of the sealant material can be measured. The non-contact displacement sensor is preferably mounted on the nozzle and is more preferably mounted at a position where the sealant material will not adhere.

In addition to the above, the number, size, and the like of non-contact displacement sensors are not particularly limited.

Since the non-contact displacement sensor is vulnerable to heat, the sensor is preferably protected with a heat insulator or the like and/or cooled with air or the like in order to prevent the influence of heat from the hot sealant material discharged from the nozzle. Accordingly, the durability of the sensor can be improved.

In the first embodiment, the example in which the tire, not the nozzle, is moved in the tire width direction and radial direction has been described. However, the tire may not be moved and the nozzle may be moved, or both the tire and the nozzle may be moved.

The rotary drive device preferably has means for increasing the width of the bead portion of the tire. In applying the sealant material to the tire, when the width of the bead portion of the tire is increased, the sealant material can be easily applied to the tire. In particular, in inserting the nozzle near the inner peripheral surface of the tire after the tire is mounted to the rotary drive device, the nozzle can be inserted only by parallel movement of the nozzle, which facilitates the control and improves productivity.

The means for increasing the width of the bead portion of the tire is not particularly limited as long as the width of the bead portion of the tire can be increased. Examples of the means include a mechanism in which two devices each having a plurality of (preferably two) rolls that have a fixed positional relationship with one another are used and the devices move in the tire width direction. The devices may be inserted through both openings of the tire to the inside of the tire and increase the width of the bead portion of the tire.

In the above production method, since the sealant material that has been mixed in the twin-screw kneading extruder or the like and in which progress of the crosslinking reaction in the extruder is inhibited is directly applied to the inner peripheral surface of the tire, the crosslinking reaction starts upon the application and the sealant material has favorable adhesiveness to the inner peripheral surface of the tire, and also the crosslinking reaction suitably proceeds, whereby a sealant tire having high sealing performance can be produced. Therefore, it is not necessary to further crosslink the sealant tire having the sealant material applied thereto, so that favorable productivity is achieved.

A crosslinking step of further crosslinking the sealant tire having the sealant material applied thereto may be performed as necessary.

The sealant tire is preferably heated in the crosslinking step. Accordingly, the rate of crosslinking of the sealant material can be increased, and the crosslinking reaction is allowed to more suitably proceed, whereby a sealant tire can be produced with higher productivity. The method for heating the sealant tire is not particularly limited, known methods can be used, and a method using an oven is suitable. The crosslinking step may be carried out, for example, by placing the sealant tire in an oven at 70°C to 190°C (preferably, 150°C to 190°C) for 2 to 15 minutes. For the reason that the sealant material that has been just applied and thus would easily flow can be prevented from flowing and the crosslinking reaction can be accomplished without deterioration of uniformity, the tire is preferably rotated in the tire circumferential direction during the crosslinking. The rotational speed is preferably 300 to 1000 rpm. Specifically, for example, an oven equipped with a rotational mechanism may be used as the oven.

Even when the crosslinking step is not additionally performed, the tire is preferably rotated in the tire circumferential direction until the crosslinking reaction of the sealant material is completed. Accordingly, the sealant material that has been just applied and thus would easily flow can be prevented from flowing and the crosslinking reaction can be accomplished without deterioration of uniformity. The rotational speed is the same as that in the crosslinking step.

In order to increase the rate of crosslinking of the sealant material, the tire is preferably warmed in advance before the application of the sealant material. Accordingly, a sealant tire can be produced with higher productivity. The temperature for pre-heating the tire is preferably 40 to 100°C and more preferably 50 to 70°C. When the temperature for pre-heating the tire is within the above range, the crosslinking reaction suitably starts upon the application and more suitably proceeds, and thus a sealant tire having high sealing performance can be produced. Moreover, when the temperature for pre-heating the tire is within the above range, the necessity to perform the crosslinking step is eliminated, and thus a sealant tire can be produced with high productivity.

Generally, the continuous kneader (particularly, the twin-screw kneading extruder) is continuously operated. Meanwhile, in producing sealant tires, tires need to be replaced one after another upon the end of application to one tire. In this case, in order to produce a higher-quality sealant tire while inhibiting a decrease in productivity, the following methods (1) or (2) may be used. The method (1) has a disadvantage of a decrease in quality, and the method (2) has a disadvantage of an increase in cost, and thus the methods (1) and (2) may be selectively used depending on the situation.

(1) The supply of the sealant material to the inner peripheral surface of the tire is controlled by operating or stopping the continuous kneader and all the feeders simultaneously.

Specifically, upon the end of application to one tire, the continuous kneader and all the feeders may be simultaneously stopped, the tire may be replaced (preferably within one minute), and then the continuous kneader and all the feeders may be simultaneously operated to restart application to a tire. By quickly replacing the tire (preferably within one minute), a decrease in quality can be inhibited.

(2) The supply of the sealant material to the inner peripheral surface of the tire is controlled by switching flow paths while the continuous kneader and all the feeders are being operated.

Specifically, the continuous kneader may be provided with another flow path in addition to a nozzle for direct feeding to the inner peripheral surface of the tire. The prepared sealant material may be discharged from the other flow path after the end of application to one tire until the end of replacement of the tire. In this method, a sealant tire can be produced while the continuous kneader and all the feeders are being operated, and thus the produced sealant tire can have higher quality.

Carcass cords used in the carcass of the sealant tire are not particularly limited, and examples thereof include fiber cords and steel cords. Among these cords, steel cords are preferable. In particular, steel cords formed of hard steel wires specified in JIS G 3506 are desirable. Use of steel cords having high strength, instead of normally used fiber cords, as carcass cords in the sealant tire can significantly improve side cut resistance (resistance to cuts formed in the tire side portions due to running over curbs, or the like) and thus further improve the puncture resistance of the entire tire including the side portions.

The structure of the steel cords is not particularly limited, and examples of the steel cords include steel cords having a $1 \times n$ single strand structure, steel cords having a k + m layer strand structure, steel cords having a $1 \times n$ bundle structure, and steel cords having an $m \times n$ multi-strand structure. Here, the steel cord having a $1 \times n$ single strand structure refers to a single-layered twisted steel cord obtained by intertwining n filaments. The steel cord having a k + m layer strand structure refers to a steel cord having a two-layered structure in which two layers are different from each other in twist direction and twist pitch, the inner layer includes k filaments, and the outer layer includes m filaments. The steel cord having a $1 \times n$ bundle structure refers to a bundle steel cord obtained by intertwining bundles of n filaments. The steel cord having an $m \times n$ multi-strand structure refers to a multi-strand steel cord obtained by intertwining m strands each obtained by first twisting n filaments together. Here, "n" represents an integer of 1 to 27, "k" represents an integer of 1 to 10, and "m" represents an integer of 1 to 3.

The twist pitch of the steel cord is preferably not greater than 13 mm and more preferably not greater than 11 mm, and is preferably not less than 5 mm and more preferably not less than 7 mm.

The steel cord preferably contains at least one preformed filament that is formed in a helical shape. Such a preformed filament can provide a relatively large gap within the steel cord to enhance rubber permeability, and also can maintain the elongation under low load, so that molding failure during vulcanization/molding can be prevented.

The surface of the steel cord is preferably plated with brass, Zn, or the like in order to enhance initial adhesion to the rubber composition.

The steel cord preferably has an elongation of 0.5 to 1.5% under a load of 50 N. If the elongation under a load of 50 N exceeds 1.5%, the reinforcing cords may exhibit reduced elongation under high load and thus disturbance absorption may not be maintained. On the other hand, if the elongation under a load of 50 N is less than 0.5%, the cords may not exhibit sufficient elongation during vulcanization/molding and thus molding failure may occur. From the viewpoint of the above, the elongation under a load of 50 N is more preferably not less than 0.7% and is more preferably not greater than 1.3%.

The number of ends of the steel cords is preferably 20 to 50 (ends/5 cm).

<Second Embodiment>

The present inventor has found as a result of a study that the method according to the first embodiment has the following disadvantage: a sealant material having a substantially string shape is occasionally difficult to attach to the inner peripheral surface of a tire and, in particular, the sealant material can be easily separated in the attachment start portion. A second embodiment is characterized by, in the above method for producing the sealant tire, attaching the sealant material with the gap between the inner peripheral surface of the tire and the tip of the nozzle being adjusted to a distance $d_1$, and then attaching the sealant material with the gap being adjusted to a distance $d_2$ larger than the distance $d_1$. Accordingly, the width of the sealant material corresponding to the attachment start portion can be increased by decreasing the gap between the inner peripheral surface of the tire and the tip of the nozzle at the start of the attachment. As a result, a sealant tire can be easily produced in which: a substantially string-shaped sealant material having adhesiveness is continuously and helically attached to the inner peripheral surface of the tire corresponding to at least the tread portion of the tire; and at least one of the longitudinal ends of the sealant material forms a wider portion having a larger width than the portion adjacent thereto in the longitudinal direction. In the sealant tire, the sealant material corresponding to the attachment start portion has an increased width, thereby improving the adhesion in this portion, so that separation of the sealant material in this portion can be prevented.

In the second embodiment, only the difference from the first embodiment is mainly described, and the description of the contents overlapping the first embodiment is omitted.

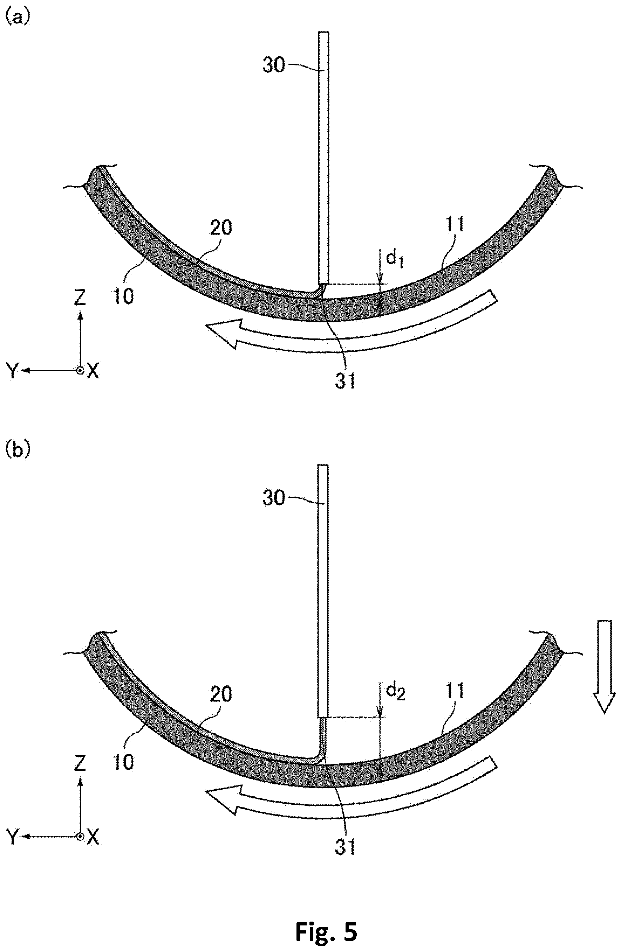

FIG. 5 shows enlarged views of the vicinity of the tip of the nozzle that forms a part of the applicator shown in FIG. 1. In FIG. 5, (a) shows a state immediately after start of attachment of the sealant material, and (b) shows a state after a predetermined time has elapsed.

FIG. 5 shows cross-sections of a part of the tire 10 taken along a plane including the tire circumferential direction and radial direction. In FIG. 5, an X direction is the tire width direction (axial direction), a Y direction is the tire circumferential direction, and a Z direction is the tire radial direction.

In the second embodiment, first, the tire 10 formed through a vulcanization step is mounted to the rotary drive device, and the nozzle 30 is inserted into the inside of the tire 10. Then, as shown in FIGS. 1 and 5, the sealant material 20 is continuously applied to the inner peripheral surface 11 of the tire 10 by discharging the sealant material 20 from the nozzle 30 while rotating the tire 10 and moving the tire 10 in the width direction. For example, the tire 10 is moved in the width direction along a pre-entered profile shape of the inner peripheral surface 11 of the tire 10.

The sealant material 20 has adhesiveness and has a substantially string shape, and thus is continuously and helically attached to the inner peripheral surface 11 of the tire 10 corresponding to the tread portion of the tire 10.

In this case, during a predetermined time from the start of the attachment, the sealant material 20 is attached with the gap between the inner peripheral surface 11 of the tire 10 and the tip 31 of the nozzle 30 being adjusted to the distance $d_1$ as shown in FIG. 5(a). After the predetermined time has elapsed, the gap is changed to the distance $d_2$ larger than the distance $d_1$ by moving the tire 10 in the radial direction, and the sealant material 20 is attached, as shown in FIG. 5(b).

The gap may be returned from the distance $d_2$ to the distance $d_1$ before the attachment of the sealant material is ended. From the viewpoint of production efficiency and the weight balance of the tire, the gap is preferably maintained at the distance $d_2$ until the attachment of the sealant material is ended.

Preferably, the value of the distance $d_1$ is maintained constant during the predetermined time from the start of the attachment, and the value of the distance $d_2$ is maintained constant after the predetermined time has elapsed. However, the values of the distances $d_1$ and $d_2$ may not necessarily be constant as long as $d_1 < d_2$ is satisfied.

The value of the distance $d_1$ is not particularly limited. For the reason that the advantageous effects are more suitably achieved, the value of the distance $d_1$ is preferably not less than 0.3 mm and more preferably not less than 0.5 mm. If the value of the distance $d_1$ is less than 0.3 mm, the tip of the nozzle is excessively close to the inner peripheral surface of the tire, and thus the sealant material easily adheres to the nozzle, so that the frequency of cleaning of the nozzle may be increased. The value of the distance $d_1$ is preferably not greater than 2 mm and more preferably not greater than 1 mm. If the value of the distance $d_1$ exceeds 2 mm, the advantageous effect to be achieved by providing a wider portion may not be sufficiently obtained.

The value of the distance $d_2$ is also not particularly limited. For the reason that the advantageous effects are more suitably achieved, the value of the distance $d_2$ is preferably not less than 0.3 mm and more preferably not less than 1 mm, and is preferably not greater than 3 mm and more preferably not greater than 2 mm. The distance $d_2$ is preferably equal to the adjusted gap $d_0$ described above.

In the present specification, the distances $d_1$ and $d_2$ between the inner peripheral surface of the tire and the tip of the nozzle refer to distances in the tire radial direction between the inner peripheral surface of the tire and the tip of the nozzle.

The rotational speed of the tire during the attachment of the sealant material is not particularly limited. For the reason that the advantageous effects are more suitably achieved, the rotational speed of the tire is preferably not less than 5 m/min and more preferably not less than 10 m/min, and is preferably not greater than 30 m/min and more preferably not greater than 20 m/min. If the rotational speed of the tire is less than 5 m/min or exceeds 30 m/min, it is difficult to apply the sealant material having a uniform thickness.

A sealant tire according to the second embodiment can be produced through the steps described above.

FIG. 6 is an explanatory diagram schematically showing an example of the sealant material attached to the sealant tire according to the second embodiment.

The substantially string-shaped sealant material 20 is wound in the tire circumferential direction and continuously and helically attached. One of the longitudinal ends of the sealant material 20 forms a wider portion 21 having a larger width than the portion adjacent thereto in the longitudinal direction. The wider portion 21 corresponds to the sealant material attachment start portion.

The width of the wider portion of the sealant material (the width of the wider portion of the applied sealant material, a length indicated by $W_1$ in FIG. 6) is not particularly limited. For the reason that the advantageous effects are more suitably achieved, the width of the wider portion is preferably not less than 103%, more preferably not less than 110%, and further preferably not less than 120% of the width of the sealant material other than the wider portion (the length indicated by $W_0$ in FIG. 6). If the width of the wider portion is less than 103%, the advantageous effect to be achieved by providing the wider portion may not be sufficiently obtained. The width of the wider portion of the sealant material is preferably not greater than 210%, more preferably not greater than 180%, and further preferably not greater than 160% of the width of the sealant material other than the wider portion. If the width of the wider portion exceeds 210%, the tip of the nozzle needs to be placed excessively close to the inner peripheral surface of the tire in order to form a wider portion, and thus the sealant material easily adheres to the nozzle, so that the frequency of cleaning of the nozzle may be increased. In addition, weight imbalance of the tire may occur.

The width of the wider portion of the sealant material is preferably substantially uniform in the longitudinal direction, but may partially be substantially not uniform. For example, the wider portion may have a shape in which the width is the largest in the attachment start portion and gradually decreases in the longitudinal direction. In the present specification, the substantially uniform width means that the width varies within a range of 90 to 110% (preferably 97 to 103%, more preferably 98 to 102%, further preferably 99 to 101%).

The length of the wider portion of the sealant material (the length of the wider portion of the applied sealant material, a length indicated by $L_1$ in FIG. 6) is not particularly limited. For the reason that the advantageous effects are more suitably achieved, the length of the wider portion is preferably less than 650 mm, more preferably less than 500 mm, further preferably less than 350 mm, and particularly preferably less than 200 mm. If the length of the wider portion is not less than 650 mm, the time period for which the tip of the nozzle is placed close to the inner peripheral surface of the tire becomes long, and thus the sealant material easily adheres to the nozzle, so that the frequency of cleaning of the nozzle may be increased. In addition, weight imbalance of the tire may occur. The wider portion of the sealant material preferably has a shorter length. However, in view of controlling the distance between the inner peripheral surface of the tire and the tip of the nozzle, the limit of the length of the wider portion is about 10 mm.

The width of the sealant material other than the wider portion (the width of the applied sealant material other than the wider portion, the length indicated by $W_0$ in FIG. 6) is not particularly limited. For the reason that the advantageous effects are more suitably achieved, the width of the sealant material other than the wider portion is preferably not less than 0.8 mm, more preferably not less than 1.3 mm, and further preferably not less than 1.5 mm. If the width of the sealant material other than the wider portion is less than 0.8 mm, the number of turns of the sealant material on the inner peripheral surface of the tire increases, so that the production efficiency may be decreased. The width of the sealant material other than the wider portion is preferably not greater than 18 mm, more preferably not greater than 13 mm, further preferably not greater than 9.0 mm, particularly preferably not greater than 7.0 mm, most preferably not greater than 6.0 mm, and still most preferably not greater than 5.0 mm. If the width of the sealant material other than the wider portion exceeds 18 mm, weight imbalance may easily occur. $W_0$ is preferably equal to the above-described W.

The width of the sealant material other than the wider portion is preferably substantially uniform in the longitudinal direction, but may partially be substantially not uniform.

The width of the region where the sealant material is attached (hereinafter, also referred to as the width of the attached region or the width of the sealant layer, and corresponding to the length calculated by $W_1 + 6 \times W_0$ in FIG. 6) is not particularly limited. For the reason that the advantageous effects are more suitably achieved, the width of the region is preferably not less than 80%, more preferably not less than 90%, and further preferably not less than 100% of the tread ground-contact width, and is preferably not greater than 120% and more preferably not greater than 110% of the tread ground-contact width.

For the reason that the advantageous effects are more suitably achieved, the width of the sealant layer is preferably 85 to 115% and more preferably 95 to 105% of the breaker width of the tire (the length of the breaker in the tire width direction).

In the sealant tire according to the second embodiment, the sealant material is attached preferably without overlapping in the width direction and more preferably without gaps.

In the sealant tire according to the second embodiment, the other longitudinal end (the end corresponding to the attachment termination portion) of the sealant material may also form a wider portion having a larger width than the portion adjacent thereto in the longitudinal direction.

The thickness of the sealant material (the thickness of the applied sealant material, the thickness of the sealant layer, the length indicated by D in FIG. 8) is not particularly limited. For the reason that the advantageous effects are more suitably achieved, the thickness of the sealant material is preferably not less than 1.0 mm, more preferably not less than 1.5 mm, further preferably not less than 2.0 mm, and particularly preferably not less than 2.5 mm, and is preferably not greater than 10 mm, more preferably not greater than 8.0 mm, and further preferably not greater than 5.0 mm. If the thickness of the sealant material is less than 1.0 mm, it is difficult to assuredly close a puncture hole when the tire is punctured. In addition, if the thickness of the sealant material exceeds 10 mm, the effect of closing a puncture hole does not change much, and the weight of the tire is increased. Thus, the thickness of the sealant material exceeding 10 mm is not preferable.

The thickness of the sealant material (the thickness of the applied sealant material, the thickness of the sealant layer) is preferably substantially uniform. Accordingly, deterioration of tire uniformity can be prevented more reliably, so that a sealant tire having more excellent weight balance can be produced.

The ratio of the thickness of the sealant material (the thickness of the applied sealant material, the thickness of the sealant layer, the length indicated by D in FIG. 8) to the width of the sealant material other than the wider portion (the width of the applied sealant material other than the wider portion, the length indicated by $W_0$ in FIG. 6) (thickness of sealant material/width of sealant material other than wider portion) is preferably 0.6 to 1.4, more preferably 0.7 to 1.3, further preferably 0.8 to 1.2, and particularly preferably 0.9 to 1.1. The ratio being closer to 1.0 results in a sealant material having an ideal string shape, so that a sealant tire having high sealing performance can be produced with high productivity.

For the reason that the advantageous effects are more suitably achieved, the cross-sectional area of the sealant material (the cross-sectional area of the applied sealant material, the area calculated by $D \times W$ in FIG. 8) is preferably not less than 0.8 mm$^2$, more preferably not less than 1.95 mm$^2$, further preferably not less than 3.0 mm$^2$, and particularly preferably not less than 3.75 mm$^2$, and is preferably not greater than 180 mm$^2$, more preferably not greater than 104 mm$^2$, further preferably not greater than 45 mm$^2$, particularly preferably not greater than 35 mm$^2$, and most preferably not greater than 25 mm$^2$.

In the second embodiment, even when the viscosity of the sealant material is within the above range, and particularly relatively high, an increase in the width of the sealant material corresponding to the attachment start portion can improve the adhesion in this portion, so that separation of the sealant material in this portion can be prevented.

The sealant tire according to the second embodiment is preferably produced by the above production method, but may be produced by another appropriate method as long as at least one of the ends of the sealant material can be formed as a wider portion.

In the above description and particularly the description of the first embodiment, the case of using a non-contact displacement sensor in applying the sealant material to the inner peripheral surface of the tire has been described. However, the sealant material may be applied to the inner peripheral surface of the tire while movement of the nozzle and/or the tire is controlled on the basis of pre-entered coordinate values without measurement using a non-contact displacement sensor.

A sealant tire including a sealant layer located inward of an inner liner in the tire radial direction can be produced by the aforementioned production method or the like. In particular, the sealant layer is preferably formed by a production method in which the sealant material is applied to the inner peripheral surface of a vulcanized/molded tire, since the advantageous effects (particularly, the effect of improving the sealing performance after running) are more suitably obtained, a problem due to flow of the sealant material or the like is less likely to arise, and there are advantages in that, for example, a tire size change can be handled by programming. In addition, for the reason that the sealant material is easily handled and the productivity is high, the sealant layer is preferably formed by a production method in which a sealant material sequentially prepared by mixing the raw materials including the crosslinking agent with a continuous kneader is sequentially applied to the inner peripheral surface of a tire.

After the sealant tire having the sealant layer located inward of the inner liner in the tire radial direction is produced by the aforementioned production method or the like, preferably after the sealant layer is formed inward of the inner liner in the tire radial direction by a step of continuously and helically applying a substantially string-shaped sealant material to the inner peripheral surface of a vulcanized/molded tire, a step of fixing particles having a specific shape to the inner surface of the sealant layer in the tire radial direction after the sealant material is applied is further performed in the present invention.

<Step of fixing particles having specific shape to inner surface of sealant layer in tire radial direction>

In the step of fixing the particles having a specific shape to the inner surface of the sealant layer in the tire radial direction, the particles having a specific shape are fixed to the inner surface in the tire radial direction of the sealant layer, which is formed inward of the inner liner in the tire radial direction. Since the sealant material, which forms the sealant layer, has adhesion, the particles having a specific shape can be easily fixed to the inner surface of the sealant layer in the tire radial direction by bringing the particles having a specific shape into contact with the sealant layer. As described above, in this step, the particles having a specific shape are fixed by the sealant material applied to the inner peripheral surface of the tire.

For the reason that the advantageous effects (particularly, the effect of improving the sealing performance after running) are more suitably obtained, the particles having a specific shape are present on the inner surface of the sealant layer in the tire radial direction at a density of 1 particle/cm$^2$ to 120 particles/cm$^2$, more preferably 2 particles/cm$^2$ to 100 particles/cm$^2$, further preferably 3 particles/cm$^2$ to 80 particles/cm$^2$, and particularly preferably 4 particles/cm$^2$ to 20 particles/cm$^2$.

The particles have a shape factor F of 5.00 to 1.00. However, since the advantageous effects (particularly, the effect of improving the sealing performance after running) are more suitably obtained when the shape of the particles is an elliptically spherical shape or a spherical shape, the upper limit of the shape factor F is preferably 4.00, more preferably 3.00, further preferably 2.00, particularly preferably 1.50, and most preferably 1.25. That is, the shape factor F of the particles is most preferably 1.25 to 1.00.

In the present specification, the shape factor F is calculated by the following equation.

$$F = L/E$$

In the above equation, L represents the maximum dimension of the particles, and E represents the minimum dimension of the particles.

Here, in the present specification, the maximum dimension L of the particles means the longest dimension of the particles, and the minimum dimension E of the particles means the shortest dimension in a direction perpendicular to the longitudinal direction of the maximum dimension. The dimensions L and E of the particles can be calculated, for example, through observation with a microscope.

For the reason that the advantageous effects (particularly, the effect of improving the sealing performance after running) are more suitably obtained, the maximum dimension L of the particles is 1.0 mm to 6.0 mm, further preferably 2.0 mm to 5.5 mm, and particularly preferably 3.0 mm to 5.0 mm.

For the reason that the advantageous effects (particularly, the effect of improving the sealing performance after running) are more suitably obtained, the minimum dimension E of the particles is preferably 0.5 mm to 10.0 mm, more preferably 1.0 mm to 6.0 mm, further preferably 2.0 mm to 5.5 mm, and particularly preferably 3.0 mm to 5.0 mm.

The material of the particles is not particularly limited, and examples thereof include resin, cellulose, metal, wood, and mineral. Among these materials, for the reason that the advantageous effects (particularly, the effect of improving the sealing performance after running) are more suitably obtained, resin, cellulose, metal, and wood are preferable, and resin and cellulose are more preferable in view of cost and the like.

The resin is not particularly limited, and examples thereof include thermosetting resins and thermoplastic resins. Since the temperature of the tire becomes high during running, in the case where a thermoplastic resin is used, deformation may occur due to heat, so that sealing performance after running may not be sufficiently obtained. Meanwhile, in the case where a thermosetting resin is used, the above concern does not arise, and more favorable sealing performance after running is obtained. As the resin, a thermosetting resin is preferable.

The thermosetting resin is not particularly limited, and examples thereof include epoxy resin, silicone resin, thermosetting polyimide, thermosetting acrylate, thermosetting urethane, phenol resin, melamine resin, urea resin, unsaturated polyester resin, and alkyd resin. Among these resins, for the reason that the advantageous effects (particularly, the effect of improving the sealing performance after running) are more suitably obtained, phenol resin is preferable.

The thermoplastic resin is not particularly limited, and examples thereof include: vinyl chloride resin; olefin resins such as polyethylene and polypropylene; vinyl acetate resins such as ethylene-vinyl acetate copolymer; acrylic resins such as ethylene-methacrylate resin; amide resin; and polystyrene.

The cellulose is not particularly limited, and examples thereof include: crystalline cellulose; cellulose fibers such as pulp; cellulose porous bodies such as cellulose beads; and cellulose derivatives such as carboxymethylcellulose and cellulose ester. Among these celluloses, for the reason that the advantageous effects (particularly, the effect of improving the sealing performance after running) are more suitably obtained, cellulose porous bodies are preferable, and cellulose beads are more preferable.

The metal is not particularly limited, and examples thereof include iron such as steel, nickel, stainless steel, copper, brass, aluminum, and titanium. Among these metals, for the reason that the advantageous effects (particularly, the effect of improving the sealing performance after running) are more suitably obtained, iron and aluminum are preferable, and steel is more preferable.

EXAMPLES

The present invention will be specifically described by means of examples, but the present invention is not limited to these examples.

Hereinafter, various chemicals used in the examples will be collectively described.

Isobutylene-isoprene-rubber A: Regular Butyl 065 (manufactured by Japan Butyl Co., Ltd., Mooney viscosity ML1+8 at 125°C = 32).

Liquid polymer A: Nisseki Polybutene HV300 (manufactured by JXTG Nippon Oil & Energy Corporation, kinematic viscosity at 40°C: 26,000 $mm^2$/s, kinematic viscosity at 100°C: 590 $mm^2$/s, number average molecular weight: 1,400).

Liquid polymer B: Nisseki Polybutene HV1900 (manufactured by JXTG Nippon Oil & Energy Corporation, kinematic viscosity at 40°C: 160,000 $mm^2$/s, kinematic viscosity at 100°C: 3,710 $mm^2$/s, number average molecular weight: 2,900).

Plasticizer: DOP (dioctyl phthalate, manufactured by Showa Kagaku Kogyo Co., Ltd., specific gravity: 0.96, viscosity: 81 mPa·s).

Carbon black: N330 (manufactured by Cabot Japan K.K., HAF grade, DBP oil absorption: 102 ml/100 g).

Crosslinking activator: VULNOC GM (manufactured by Ouchi Shinko Chemical Industrial Co., Ltd., p-benzoquinone dioxime).

Crosslinking agent: NYPER NS (manufactured by NOF Corporation, dibenzoyl peroxide (40% diluted product, dibenzoyl peroxide: 40%, dibutyl phthalate: 48%), the blending amount in Table 1 is the net amount of benzoyl peroxide).

PF: phenol resin, custom balls manufactured by Sato Tekko Co., Ltd.

Cellulose beads: Viscopearl A manufactured by Rengo Co., Ltd.

Steel: balls manufactured by Nakatani Kinzoku Kogyo K.K.

Wood: wood balls 4Φ manufactured by Koide Tokyo.

Polystyrene: expanded polystyrene beads manufactured by Fujicut Co., Ltd.

(Examples)

<Production of sealant tire>

According to the composition in Table 1, the isobutylene-isoprene-rubber A, the carbon black, and the crosslinking activator were fed through the upstream supply port of a twin-screw kneading extruder, the liquid polybutene B was fed through the midstream supply port of the twin-screw kneading extruder, and the liquid polybutene A, the plasticizer, and the crosslinking agent were fed through the downstream supply port of the twin-screw kneading extruder. The fed materials were kneaded under conditions of a barrel temperature of 100°C and 200 rpm to prepare a sealant material. Regarding the liquid polybutene, liquid polybutene at 50°C was fed through the supply port.

(Time for kneading each material)

Time for mixing the isobutylene-isoprene-rubber A, the carbon black, and the crosslinking activator: 2 minutes
Time for mixing the liquid polybutene B: 2 minutes
Time for mixing the liquid polybutene A, the plasticizer, and the crosslinking agent: 1.5 minutes

A sealant layer was formed on a tire (215/55R17, 94W, rim: 17X8J, cavity cross-sectional area at the time of mounting the tire to the rim: 194 $cm^2$, vulcanized/molded, tire rotational speed: 12 m/min, pre-heating temperature: 40°C, tire breaker width: 180 mm) mounted on a rotary drive device, by extruding the sequentially prepared sealant material (temperature: 100°C) from the twin-screw kneading extruder and continuously and helically attaching (spirally applying) the sealant material to the inner peripheral surface of the tire via a nozzle as shown in FIGS. 1 to 4 such that the sealant material (viscosity: 10000 Pa·s (40°C), substantially string shape, thickness: 3 mm, width: 4 mm) has a thickness of 3 mm and a width in the attached region of 178 mm. Furthermore, particles were provided on the inner surface of the formed sealant layer in the tire radial direction according to Table 2 using the adhesiveness of the sealant material. Here, each particle was formed into a desired shape, for example, by cutting the above material as appropriate.

The density in Table 2 means the density at which the particles are present on the inner surface of the sealant layer in the tire radial direction.

The width of the sealant material was adjusted so as to be substantially uniform in the longitudinal direction. In addition, the viscosity of the sealant material was measured according to JIS K 6833 at 40°C with a rotational viscometer. Total volume of the tire inner cavity: 36600 cm³

(Comparative Example 1)

In Comparative Example 1, the same process as in Examples was performed except that no particles were provided.

The following evaluation was made for the obtained sealant tires.

<Air seal test (initial sealing performance)>

The initial internal pressure of a tire was set to 250 kPa, and 20 nails obtained by processing nails (body diameter: 5.2 mm) of JIS N150 into a length of 50 mm were driven right into the block portion of the tire at an atmospheric temperature of 25°C. After the tire was allowed to stand for 1 hour, the nails were removed, and the tire was allowed to stand at an atmospheric temperature of 25°C for the whole day. Then, soapy water was put to the tire, and the number of nail holes through which no air leaked was confirmed. A higher index indicates better initial sealing performance.

<Air seal test (sealing performance after running)>

The initial internal pressure of a tire was set to 250 kPa, and 20 nails obtained by processing nails (body diameter: 5.2 mm) of JIS N150 into a length of 50 mm were driven right into the block portion of the tire at an atmospheric temperature of 25°C. After running was performed on a drum at an atmospheric temperature of 25°C at a speed of 150 km/h under a load of 4.2 kN for 750 km, the nails were removed, and the tire was allowed to stand at an atmospheric temperature of 25°C for the whole day. Then, soapy water was put to the tire, and the number of nail holes through which no air leaked was confirmed. A higher index indicates better sealing performance after running. When the index was not less than 8, the sealing performance after running was determined as good.

<Foreign matter adhesion test>

A tire was not mounted to a rim, 10 ping-pong balls were scattered onto the inner peripheral surface of the tire, and the tire was caused to make three rotations. Thereafter, the tire was shaken to take out the ping-pong balls. Then, the number of ping-pong balls remaining on the tire was counted. A smaller number indicates that adhesion of foreign matter to the inner peripheral surface of the tire can be more inhibited. When the number is not greater than 2, the inhibition of adhesion of foreign matter was determined as good.

<Particle cost index>

Regarding the cost taken to provide the particles, an index is shown with the cost in Example 6 as a reference. A higher index indicates lower cost.

[Table 1]

| | | |
|---|---|---|
| Blending amount (parts by mass) | Isobutylene-isoprene-rubber A (ML1+8 at 125°C: 32) | 100 |
| | Liquid polymer A (kinematic viscosity at 100°C: 590) | 100 |
| | Liquid polymer B (kinematic viscosity at 100°C: 3710) | 100 |
| | Plasticizer (DOP) | 10 |
| | Carbon black (N330) | 10 |
| | Crosslinking activator (p-benzoquinone dioxime) | 10 |
| | Crosslinking agent (dibenzoyl peroxide) | 10 |

[Table 2]

| | | Com. Ex. 1 | Ex. 1 | Ex. 2 | Ex. 3 | Ex. 4 | Ex. 5 | Ex. 6 |
|---|---|---|---|---|---|---|---|---|
| Particles | Maximum dimension L (mm) | None | 5.0 | 5.0 | 5.0 | 7.0 | 6.0 | 4.0 |
| | Minimum dimension E (mm) | None | 1.0 | 4.0 | 5.0 | 7.0 | 6.0 | 4.0 |
| | F = L/E | None | 5.00 | 1.25 | 1.00 | 1.00 | 1.00 | 1.00 |
| | Shape | - | Columnar | Elliptically spherical | Spherical | Spherical | Spherical | Spherical |
| | Density (particles/cm$^2$) | -- | 16 | 4 | 4 | 2 | 3 | 5 |
| | Material | None | PF | PF | PF | PF | PF | PF |
| | Type | None | Thermosetting resin | Thermosetting resin | Thermosetting resin | Thermosetting resin | Thermosetting resin | Thermosetting resin |
| Sealant | Thickness (mm) | 3.0 | 3.0 | 3.0 | 3.0 | 3.0 | 3.0 | 3.0 |
| | Width (mm) | 178 | 178 | 178 | 178 | 178 | 178 | 178 |
| Evaluation results | Initial sealing performance | 20 | 20 | 20 | 20 | 20 | 20 | 20 |
| | Sealing performance after running | 4 | 10 | 18 | 17 | 10 | 14 | 18 |
| | Foreign matter adhesion | 10 | 0 | 0 | 0 | 0 | 0 | 0 |
| | Particle cost index | -- | 10 | 130 | 160 | 210 | 200 | Reference |

(continued)

| | | Ex. 7 | Ex. 8 | Ex. 9 | Ex. 10 | Ex. 11 | Ex. 12 | Ex. 13 |
|---|---|---|---|---|---|---|---|---|
| Particles | Maximum dimension L (mm) | 3.0 | 2.0 | 1.0 | 4.0 | 4.0 | 4.0 | 4.0 |
| | Minimum dimension E (mm) | 3.0 | 2.0 | 1.0 | 4.0 | 4.0 | 4.0 | 4.0 |
| | F=L/E | 1.00 | 1.00 | 1.00 | 1.00 | 1.00 | 1.00 | 1.00 |
| | Shape | Spherical | Spherical | Spherical | Spherical | Spherical | Spherical | Spherical |
| | Density (particles/cm$^2$) | 11 | 25 | 80 | 4 | 5 | 6 | 5 |
| | Material | PF | PF | PF | Cellulose beads | Steel | Wood | Polystyrene |
| | Type | Thermosetting resin | Thermosetting resin | Thermosetting resin | Cellulose | Metal | Wood | Thermoplastic resin |
| Sealant | Thickness (mm) | 3.0 | 3.0 | 3.0 | 3.0 | 3.0 | 3.0 | 3.0 |
| | Width (mm) | 178 | 178 | 178 | 178 | 178 | 178 | 178 |
| Evaluation results | Initial sealing performance | 20 | 20 | 20 | 20 | 20 | 20 | 20 |
| | Sealing performance after running | 17 | 14 | 14 | 18 | 18 | 18 | 10 |
| | Foreign matter adhesion | 0 | 0 | 0 | 0 | 0 | 0 | 0 |
| | Particle cost index | 90 | 60 | 30 | 120 | 3000 | 5400 | 80 |

The pneumatic tire of each Example including a scalant layer located inward of an inner liner in the tire radial direction and having particles having a shape factor F of 5.00 to 1.00 (F = L/E, L represents the maximum dimension of the particles, E represents the minimum dimension of the particles) on the inner surface of the sealant layer in the tire radial direction had excellent sealing performance after running while inhibiting foreing matter from adhering to the inner peripheral surface of the tire. In addition, favorable initial sealing performance was also obtained.

**Claims**

1.  A pneumatic tire (10) comprising a sealant layer located inward of an inner liner in a tire radial direction, **characterized in that**
    particles having a shape factor F of 5.00 to 1.00 (F = L/E, L represents a maximum dimension of the particles, E represents a minimum dimension of the particles) are provided on an inner surface of the sealant layer in the tire radial direction, and
    wherein the maximum dimension L of the particles is 1.0 mm to 6.0 mm and
    the particles are present on the inner surface of the sealant layer in the tire radial direction at a density of 1 particle/cm$^2$ to 120 particles/cm$^2$.

2.  The pneumatic tire (10) according to claim 1, wherein the shape factor F of the particles is 1.25 to 1.00.

3.  The pneumatic tire (10) according to any one of claims 1 to 2, wherein the particles are formed from a resin or cellulose.

4.  The pneumatic tire (10) according to claim 3, wherein the resin is a thermosetting resin.

5.  The pneumatic tire (10) according to any one of claims 1 to 4, wherein
    the sealant layer is formed of a substantially string-shaped sealant material (20) continuously and helically arranged along an inner peripheral surface (11) of the tire (10), and
    the particles are fixed by the sealant material (20).

**Patentansprüche**

1.  Luftreifen (10), der eine Dichtmittelschicht umfasst, die sich in einer radialen Richtung des Reifens innen von einem Innerliner befindet, **dadurch gekennzeichnet, dass**
    Partikel mit einem Formfaktor F von 5,00 bis 1,00 (F = L/E, L stellt eine maximale Abmessung der Partikel dar, E stellt eine minimale Abmessung der Partikel dar) auf einer inneren Oberfläche der Dichtmittelschicht in der radialen Richtung des Reifens vorgesehen sind, und
    wobei die maximale Abmessung L der Partikel 1,0 mm bis 6,0 mm beträgt und
    die Partikel auf der inneren Oberfläche der Dichtmittelschicht in der radialen Richtung des Reifens in einer Dichte von 1 Partikel/cm$^2$ bis 120 Partikel/cm$^2$ vorhanden sind.

2.  Luftreifen (10) nach Anspruch 1, wobei der Formfaktor F der Partikel 1,25 bis 1,00 beträgt.

3.  Luftreifen (10) nach einem der Ansprüche 1 bis 2, wobei die Partikel aus einem Harz oder Zellulose gebildet sind.

4.  Luftreifen (10) nach Anspruch 3, wobei das Harz ein wärmehärtendes Harz ist.

5.  Luftreifen (10) nach einem der Ansprüche 1 bis 4, wobei
    die Dichtmittelschicht aus einem im Wesentlichen fadenförmigen Dichtmittelmaterial (20) gebildet ist, das kontinuierlich und wendeiförmig entlang einer inneren Umfangsoberfläche (11) des Reifens (10) angeordnet ist, und
    die Partikel durch das Dichtmittelmaterial (20) fixiert sind.

**Revendications**

1.  Bandage pneumatique (10) comprenant une couche d'étanchéité située à l'intérieur d'une doublure interne dans une direction radiale du pneumatique, **caractérisé en ce que**
    des particules ayant un facteur de forme F de 5,00 à 1,00 (F = L/E, L représentant une dimension maximum des particules, E représentant une dimension minimum des particules) sont prévues sur une surface intérieure de la couche d'étanchéité dans la direction radiale du pneumatique, et dans lequel la dimension maximum L des particules est de 1,0 mm à 6,00 mm, et
les particules sont présentes sur la surface intérieure de la couche d'étanchéité dans la direction radiale du pneumatique à une densité allant de 1 particule/cm$^2$ à 120 particules/cm$^2$.

2. Bandage pneumatique (10) selon la revendication 1, dans lequel le facteur de forme F des particules est de 1,25 à 1,00.

3. Bandage pneumatique (10) selon l'une quelconque des revendications 1 à 2, dans lequel les particules sont formées à partir de résine ou de cellulose.

4. Bandage pneumatique (10) selon la revendication 3, dans lequel la résine est une résine thermodurcissable.

5. Bandage pneumatique (10) selon l'une quelconque des revendications 1 à 4, dans lequel
la couche d'étanchéité est formée d'un matériau d'étanchéité (20) sensiblement en forme de ruban agencé en continu et en hélice le long d'une surface périphérique intérieure (11) du pneumatique (10), et
les particules sont fixées par le matériau d'étanchéité (20).

**Fig. 1**

**Fig. 2**

Fig. 3

**Fig. 4**

(a)

(b)

**Fig. 5**

**Fig. 6**

**Fig. 7**

FLOWMETER FLOWMETER FLOWMETER

50

10

30

60

62

61c 61b 61a

EP 3 360 701 B1

32

**Fig. 8**

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4057090 A

- JP 2009269446 A